# EUROPEAN PATENT APPLICATION

(11) **EP 4 734 641 A1**
(43) Date of publication of application: **29.04.2026**
(21) Application number: 23942724.8
(22) Date of filing: 26.06.2023
(51) Int. Cl.: H04W 72/232, G06N 20/00

(54) **DATA SET DETERMINATION METHOD AND APPARATUS, DEVICE, CHIP AND STORAGE MEDIUM**

(71) Applicant: GUANGDONG OPPO MOBILE TELECOMMUNICATIONS CORP., LTD., Dongguan, Guangdong 523860 (CN)
(72) Inventor: CAO, Jianfei, Dongguan, Guangdong 523860 (CN); SHI, Zhihua, Dongguan, Guangdong 523860 (CN); LIU, Wendong, Dongguan, Guangdong 523860 (CN)
(74) Representative: Taor, Simon Edward William
(86) International application number: PCT/CN2023/102482
(87) International publication number: WO 2025/000196

(57) **Abstract**

Embodiments of the present application provide a data set determination method and apparatus, a communication device, a chip and a storage medium. The method comprises: a terminal sends a data set to a network device, wherein the data set comprises at least one input instance and at least one tag instance; the input instance is obtained by the terminal measuring a downlink reference signal in a first downlink reference signal set or a second downlink reference signal set, and the tag instance is obtained by the terminal measuring a downlink reference signal in a third downlink reference signal set; and the data set is used for training a first model on the network device and the first model is used for predicting a target downlink reference signal and/or target link quality.

## Description

### TECHNICAL FIELD

Embodiments of the disclosure relate to the technical field of communications, and in particular to a method and apparatus for data set determination, a device, a chip, and a storage medium.

### BACKGROUND

During downlink beam (pair) sweeping, lots of reference signal measurement need to be carried out, which leads to a large downlink resource overhead and a large measurement delay. For example, each Transmission Reception Point (TRP) may deploy 64 different downlink transmission directions (borne by 64 Synchronization Signal and PBCH Blocks (SSBs)) in a Frequency Range 2 (FR2), and the terminal uses multiple beams in receiving (assuming that each antenna panel has 4 different receiving beams); then the terminal needs to measure at least 64 × 4 = 256 beam pairs, that is, a downlink resource overhead of 256 resources is needed.

A model-based beam (pair) prediction mechanism is studied in relevant technologies, with the original intention to reduce the downlink resource overhead and the measurement delay. However, a large amount of data needs to be collected for model training. Therefore, how to collect a large amount of data for model training requires support of relevant technologies.

### SUMMARY

Embodiments of the disclosure provide a method and apparatus for data set determination, a device, a chip, and a storage medium.

In a first aspect, embodiments of the disclosure provide a method for data set determination, including: transmitting, by a terminal, a data set to a network device, wherein the data set includes at least one input instance and at least one label instance; the input instance is obtained based on measurement by the terminal on downlink reference signal(s) in a first downlink reference signal set or a second downlink reference signal set, and the label instance is obtained based on measurement by the terminal on downlink reference signal(s) in a third downlink reference signal set; and the data set is used for training a first model on the network device side, and the first model is used for predicting a target downlink reference signal and/or a target link quality.

In a second aspect, embodiments of the disclosure provide a method for data set determination, including: acquiring, by a terminal, a data set, wherein the data set includes at least one input instance and at least one label instance; the input instance is obtained based on measurement on downlink reference signal(s) in a first downlink reference signal set or a second downlink reference signal set, and the label instance is obtained based on measurement on downlink reference signal(s) in a third downlink reference signal set; and the data set is used for adjusting a second model on the terminal side, and the second model is used for predicting a target downlink reference signal and/or a target link quality.

In a third aspect, embodiments of the disclosure provide a method for data set determination, including: receiving, by a network device, a data set from a terminal, wherein the data set includes at least one input instance and at least one label instance; the input instance is obtained based on measurement by the terminal on downlink reference signal(s) in a first downlink reference signal set or a second downlink reference signal set, and the label instance is obtained based on measurement by the terminal on downlink reference signal(s) in a third downlink reference signal set; and the data set is used for training a first model on the network device side, and the first model is used for predicting a target downlink reference signal and/or a target link quality.

In a fourth aspect, embodiments of the disclosure provide an apparatus for data set determination, applied to a terminal and including: a transmission unit, configured to transmit a data set to a network device, wherein the data set includes at least one input instance and at least one label instance; the input instance is obtained based on measurement by the terminal on downlink reference signal(s) in a first downlink reference signal set or a second downlink reference signal set, and the label instance is obtained based on measurement by the terminal on downlink reference signal(s) in a third downlink reference signal set; and the data set is used for training a first model on the network device side, and the first model is used for predicting a target downlink reference signal and/or a target link quality.

In a fifth aspect, embodiments of the disclosure provide an apparatus for data set determination, applied to a terminal and including: an acquisition unit, configured to acquire a data set, wherein the data set includes at least one input instance and at least one label instance; the input instance is obtained based on measurement on downlink reference signal(s) in a first downlink reference signal set or a second downlink reference signal set, and the label instance is obtained based on measurement on downlink reference signal(s) in a third downlink reference signal set; and the data set is used for adjusting a second model on the terminal side, and the second model is used for predicting a target downlink reference signal and/or a target link quality.

In a sixth aspect, embodiments of the disclosure provide an apparatus for data set determination, applied to a network device and including: a receiving unit, configured to receive a data set from a terminal, wherein the data set includes at least one input instance and at least one label instance; the input instance is obtained based on measurement by the terminal on downlink reference signal(s) in a first downlink reference signal set or a second downlink reference signal set, and the label instance is obtained based on measurement by the terminal on downlink reference signal(s) in a third downlink reference signal set; and the data set is used for training a first model on the network device side, and the first model is used for predicting a target downlink reference signal and/or a target link quality.

In a seventh aspect, embodiments of the disclosure provide a communication device including a memory and a processor; wherein the memory is configured to store computer-executable instructions; and the processor is coupled to the memory and is configured to execute the computer-executable instructions to implement the method of any above aspect.

In an eighth aspect, embodiments of the disclosure provide a chip. The chip includes a processor configured to call a computer program from a memory and run the computer program to enable a device installed with the chip to perform the method of any above aspect.

In a ninth aspect, embodiments of the disclosure provide a computer-readable storage medium having stored thereon with a computer program that, when executed by at least one processor, implements the method of any above aspect.

In the technical solutions of the embodiments of the disclosure, on the one hand, regarding the training of a first model at a network device side, a terminal transmits to a network device a data set for training the first model. The data set includes at least one input instance and at least one label instance. The input instance is obtained by the terminal measuring downlink reference signal(s) in a first downlink reference signal set or a second downlink reference signal set. The at least one label instance is obtained by the terminal measuring downlink reference signal(s) in a third downlink reference signal set. Thus, collection of the data set for model training at the network device side is realized. On the other hand, regarding the training of a second model at the terminal side, the terminal may acquire a data set of a small amount for training the second model at the terminal side The data set includes at least one input instance and at least one label instance. The input instance is obtained by the terminal measuring downlink reference signal(s) in a first downlink reference signal set or a second downlink reference signal set. The label instance is obtained by the terminal measuring downlink reference signal(s) in a third downlink reference signal set. Thus, collection of the data set for model training at the terminal side is realized.

### BRIEF DESCRIPTION OF THE DRAWINGS

The drawings described herein serve for further understanding of the disclosure, and constitute a part of the disclosure. Exemplary embodiments of the disclosure and description thereof are used to explain the disclosure and do not form inappropriate limitation of the disclosure. In the drawings, the following figures are shown.
FIG. 1 illustrates a schematic diagram of an application scenario according to embodiments of the disclosure.
FIG. 2 illustrates a schematic diagram of downlink beam management in a new radio (NR) system.
FIG. 3 illustrates a schematic diagram of a structure of a neuron.
FIG. 4 illustrates a schematic diagram of a neural network.
FIG. 5 illustrates a schematic diagram of a neural network model applicable for embodiments of the disclosure.
FIG. 6 illustrates another schematic diagram of a neural network model applicable for embodiments of the disclosure.
FIG. 7 illustrates a schematic flowchart of a method for data set determination according to embodiments of the disclosure.
FIG. 8 illustrates a format of a media access control (MAC) layer container according to embodiments of the disclosure.
FIG. 9 illustrates a schematic diagram of a process of collecting a data set in scenario 1 according to embodiments of the disclosure.
FIG. 10 illustrates a schematic diagram of a process of collecting a data set in scenario 2 according to embodiments of the disclosure.
FIG. 11 illustrates a schematic flowchart of another method for data set determination according to embodiments of the disclosure.
FIG. 12 illustrates a first schematic diagram of structural composition of an apparatus for data set determination according to embodiments of the disclosure.
FIG. 13 illustrates a second schematic diagram of structural composition of an apparatus for data set determination according to embodiments of the disclosure.
FIG. 14 illustrates a third schematic diagram of structural composition of an apparatus for data set determination according to embodiments of the disclosure.
FIG. 15 illustrates a schematic structural diagram of a communication device according to embodiments of the disclosure.
FIG. 16 illustrates a schematic structural diagram of a chip according to embodiments of the disclosure.
FIG. 17 illustrates a schematic block diagram of a communication system according to embodiments of the disclosure.

### DETAILED DESCRIPTION

Technical solutions of the embodiments of the disclosure will be described below in conjunction with the drawings of the embodiments of the disclosure. Apparently, the described embodiments are some rather than all embodiments of the disclosure. All other embodiments obtained by those skilled in the art based on the embodiments of the disclosure without paying any inventive effort shall fall within the scope of protection of the disclosure.

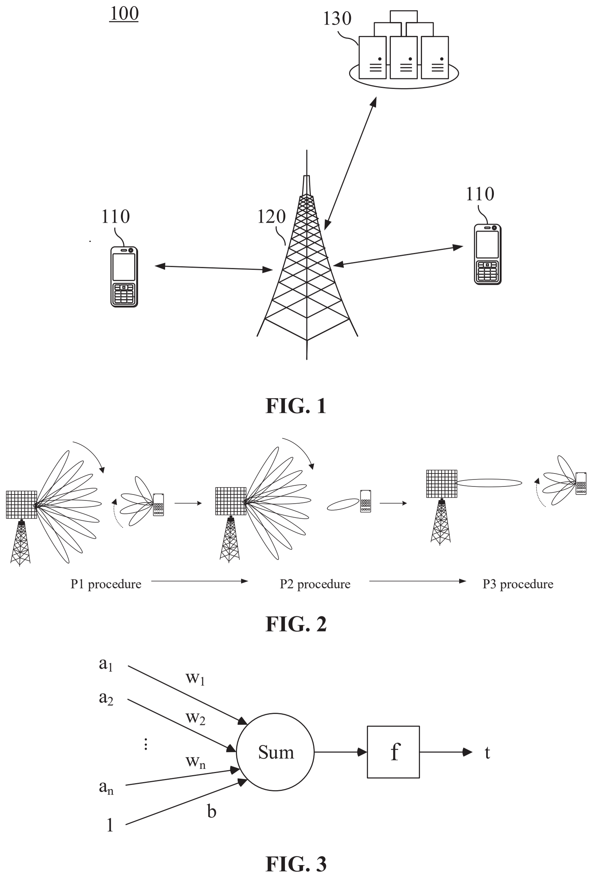

FIG. 1 illustrates a schematic diagram of an application scenario according to embodiments of the disclosure.

As illustrated in FIG. 1, a communication system 100 may include a terminal 110 and a network device 120. The network device 120 may communicate with the terminal 110 through an air interface. Multi-service transmission is supported between the terminal 110 and the network device 120.

It is to be understood that the communication system 100 is provided here to describe the embodiments of the disclosure in an exemplary way, but the embodiments of the disclosure are not limited thereto. That is to say, the technical solutions of the embodiments of the disclosure may be applied to various communication systems, for example a long term evolution (LTE) system, an LTE time division duplex (TDD) system, a universal mobile telecommunication system (UMTS), an Internet of Things (IoT) system, a narrow band Internet of Things (NB-IoT) system, an enhanced machine-type communications (eMTC) system, a 5^{th}-generation communication system (or referred to as new radio (NR) communication system), a future communication system.

In the communication system 100 as illustrated in FIG. 1, the network device 120 may be an access network device communicating with the terminal 110. The access network device can provide communication coverage for a specific geographical area, and can communicate with the terminal 110 (e.g., user equipment (UE)) within the coverage.

The network device 120 may be an evolutional Node B (eNB or eNodeB) in an LTE system, or a next generation radio access network (NG RAN) device, or a gNB in an NR system, or a radio controller in a cloud radio access network (CRAN). Alternatively, the network device 120 may be a relay station, an access point, a vehicle-mounted device, a wearable device, a hub, a switch, a network bridge, a router, a network device in a future evolved public land mobile network (PLMN) or the like.

The terminal 110 may be any terminal device, including but not limited to a terminal in wired or wireless connection with the network device 120 or another terminal.

For example, the terminal 110 may refer to an access terminal, user equipment (UE), a subscriber unit, a subscriber station, a mobile station, a remote station, a remote terminal, a mobile device, a user terminal, a terminal, a wireless communication device, a subscriber agent or a user device. The access terminal may be a cellular phone, a cordless phone, a session initiation protocol (SIP) phone, an Internet of Things (IoT) device, a satellite hand-held terminal, a wireless local loop (WLL) station, a personal digital assistant (PDA), a hand-held device with a wireless communication function, a computing device or another processing device connected to a radio modem, a vehicle-mounted device, a wearable device, a terminal in a 5G network, a terminal in a future evolved network or the like.

The terminal 100 may be used in device to device (D2D) communication.

The wireless communication system 100 may further include a core network device 130 in communication with a base station. The core network device 130 may be a 5G core (5GC) device, for example an access and mobility management function (AMF), for another example an authentication server function (AUSF), for another example a user plane function (UPF), for another example a session management function (SMF). Optionally, the core network device 130 may also be an evolved packet core (EPC) device in an LTE network, for example a session management function+core packet gateway (SMF+PGW-C) device. It is to be understood that the SMF+PGW-C can realize the functions of both an SMF and a PGW-C. During evolution of the network, the above core network device may also have other names, or the function of the core network may be divided to form new network entities, which are not limited in the embodiments of the disclosure.

Various functional units of the communication system 100 may also establish a connection with one another through a next generation (NG) interface so as to realize communication.

For example, the terminal establishes an air interface connection with an access network device through an NR interface, so as to transmit user plane data and a control plane signaling. The terminal may establish a control plane signaling connection with the AMF through an NG interface 1 (N1 for short). The access network device for example a gNB may establish a user plane data connection with the UPF through an NG interface 3 (N3 for short). The access network device may establish a control plane signaling connection with the AMF through an NG interface 2 (N2 for short). The UPF may establish a control plane signaling connection with the SMF through an NG interface 4 (N4 for short). The UPF may interact user plane data with a data network through a NG interface 6 (N6 for short). The AMF may establish a control plane signaling connection with the SMF through an NG interface 11 (N11 for short). The SMF may establish a control plane signaling connection with a Policy Control Function (PCF) through an NG interface 7 (N7 for short).

FIG. 1 exemplarily illustrates a base station, a core network device and two terminals. Optionally, the wireless communication system 100 may include multiple base stations, and there may be another number of terminals within the coverage of each base station, which is not limited in the embodiments of the disclosure.

It is to be noted that FIG. 1 merely illustrates a system to which the disclosure is applicable in an exemplary way. Of course, the method illustrated in the embodiments of the disclosure may also be applicable to other systems. In additional, the terms "system" and "network" herein are often used exchangeably. The term "and/or" herein merely describes a relation between associated objects, representing that three relations may exist. For example, A and/or B may represent following three cases: existence of A alone, existence of both A and B, and existence of B alone. Additionally, the character "/" generally indicates that the contextual objects are in an "or" relationship. It is also to be understood that "indicate" referred to in the embodiments of the disclosure may be direct indication or indirect indication, or may refer to that there is an association relationship. By way of example, "A indicates B" may refer to that A directly indicates B, for example B may be acquired through A. "A indicates B" may also refer to that A indirectly indicates B, for example, A indicates C and B may be acquired through C. "A indicates B" may also refer to that there is an association relationship between A and B. It is to be also understood that "correspond" referred to in the embodiments of the disclosure may mean that there is a direct correspondence or indirect correspondence between two objects, or may mean that there is an association relationship between the two objects, or may mean a relationship that one object indicates or is indicated by another object or a relationship that one object configures or is configured by another object. It also to be understood that "predefine" or "predefined rule" mentioned in the embodiments of the disclosure may be realized by codes or forms prestored in a device (for example, a terminal and a network device) or in other ways that can be used to indicate relevant information. The particular implementation is not limited in the disclosure. For example, "predefined" may refer to being defined in a protocol. It is also to be understood that, in the embodiments of the disclosure, the "protocol" may refer to standard protocols in the field of communications, for example LTE protocols, NR protocols or relevant protocols applied in future communication systems, which is not limited in the embodiments of the disclosure.

For convenience in understanding the technical solutions of the embodiments of the disclosure, the relevant technologies of the embodiments of the disclosure are described hereinafter. Any combination formed by the relevant technologies below as optional solutions and the technical solutions of the embodiments of the disclosure shall fall within the scope of protection of the embodiments of the disclosure.

### 1. beam management in new radio (NR)

In a first version (i.e., Rel. 15) of an NR system, millimeter-wave communication has been introduced, namely a beam management mechanism is introduced, including uplink beam management and downlink beam management. The downlink beam management includes procedures such as downlink beam sweeping, beam measurement and reporting of UE, and downlink beam indication of network (NW). The uplink beam management includes uplink beam sweeping (UE transmits a sounding reference signal (SRS) for beam sweeping), beam measurement of NW, and uplink beam indication and configuration for UE.

FIG. 2 illustrates a schematic diagram of downlink beam management in an NR system. A downlink beam sweeping procedure may for example include 3 procedures, namely, P1, P2 and P3 procedures. The P1 procedure refers to a procedure that a network (NW) sweeps different transmitting beams, and UE sweeps different receiving beams. The P2 procedure refers to a procedure that an NW sweeps different transmitting beams, and UE uses a same receiving beam. The P3 procedure refers to a procedure that an NW uses a same receiving beam, and UE sweeps different receiving beams. Typically, the P1 procedure may be performed before the P2 and P3 procedures. For example, in the example of FIG. 2, the order of execution may be P1, P2, and P3. In general, the NW completes the above beam sweeping procedure by transmitting a downlink reference signal SSB and/or a Channel State Information-Reference Signal (CSI-RS).

The beam reporting mechanism in NR Rel.15 includes: UE measures multiple transmitting beams (P2 procedure) or transmitting-receiving beam pairs (P1 procedure), and reports L transmitting beams having the highest L1-Reference Signal Receiving Power (L1-RSRP) and performance thereof to an NW in the form of Channel State Information (CSI). After decoding the beam information reported by the UE, the NW may consider a downlink transmission channel and signal, and may indicate beam information to the UE by carrying a Transmission Configuration Indicator (TCI) State (including an SSB or CSI-RS resource index as reference for the UE) in Media access control (MAC) signaling and/or Downlink Control Information (DCI) signaling. The UE performs downlink reception using a receiving beam corresponding to a transmitting beam of the indicated SSB or CSI-RS.

Correspondingly, three uplink beam sweeping procedures, namely U1, U2, and U3, are defined in NR. The U1 procedure includes that UE sweeps different transmitting beams, and NW sweeps different receiving beams. The U2 procedure includes that UE uses a same transmitting beam, and NW sweeps different receiving beams. The U3 procedure includes that UE sweeps different transmitting beams, and NW uses a same receiving beam. For an uplink beam sweeping procedure, since the NW measures the beam(s) from the UE, there is no need for beam reporting by the UE. The NW may select an appropriate uplink beam from the measured uplink beams, and indicate or configure same to the UE for uplink transmission. At the same time, the NW may prepare a corresponding receiving beam.

### 2. Neural network (NN)

### 1) Structure of neuron

A Neural Network is an operation model composed of multiple neuron nodes connected to each other. The connection between nodes represents a weighted value from an input signal to an output signal, which is referred to as a weight. Each node performs weighted summation of different input signals, and outputs through a specific activation function. The structure of a neuron is as illustrated in in FIG. 3. a₁, a₂..., aₙ and 1 are input of the neuron. w₁, w₂, ..., wₙ and b represent weights. Sum represents a summation function. f represents an activation function. t represents an output result.

### 2) Deep neural network

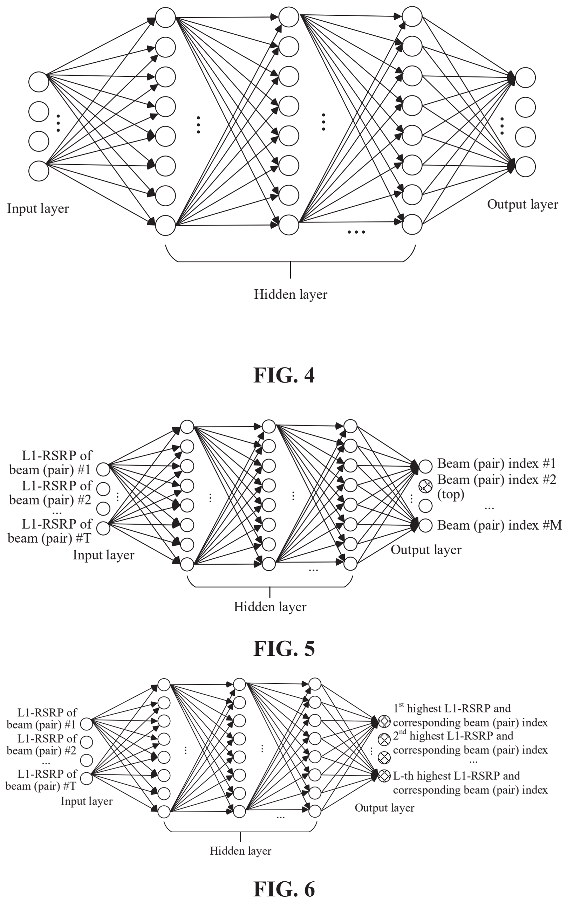

FIG. 4 illustrates a simple neural network. The neural network includes an input layer, hidden layers and an output layer. Through different connection manners of multiple neurons, combined with different weights and activation functions, different outputs may be generated, and then the mapping relationships from the input to the output may be fitted. Exemplarily, each node in a previous layer may be connected to all nodes in a next layer, forming a fully connected model. The fully connected model may also be referred to as a Deep Neural Network (DNN). The NN model may be used to perform spatial-domain downlink beam prediction or temporal downlink beam prediction.

### 3) Artificial Intelligence (Al)/Machine Learning (ML) based beam management

AI/ML-based beam management is the main use case of the R18 AI project, in which two use cases are defined, namely spatial -domain downlink beam prediction and temporal downlink beam prediction.

Definition of spatial-domain beam prediction (BM-Case1): the spatial-domain downlink beam prediction in a Set A is performed by measuring the beams (pairs) in a Set B. Either the Set B is a subset of the Set A, or the Set B and the Set A are two different beam (pair) sets. The Set B may be understood as a partial subset of beams (pairs), and the Set A may be understood as a complete set of beams (pairs).

Definition of temporal beam prediction (BM-Case2): future P times of top beam (pair) prediction in the Set A are performed by measuring the beams (pairs) in the Set B for N times. The Set B may be a subset of the Set A, or may be the same as Set A.

FIG. 5 illustrates a schematic diagram of a neural network model applicable for embodiments of the disclosure. The model is a model for top beam (pair) prediction, and it may be considered that the model solves a multi-classification problem. The model may be used to fit the relationship between the measurement results of the Set B (such as the L1-RSRPs of the reference signals/beams (pairs) in the Set B) and the top L beams (pairs) in the Set A. The measurement results of the Set B may be used as the input of the model, and the output may be the top K beam (pair) indices selected from the complete set (Set A), that is, the K beams (pairs) with the highest L1-RSRPs in the Set A. In the example of FIG. 5, the number of beams (pairs) in the Set B is T, and the number of beams (pairs) in the Set A is M. K = 1, and beam (pair) # 2 is the beam (pair) having the highest L 1-RSRP, that is, the top beam (pair). The label used by the model is an top (i.e., with the highest L1-RSRP) beam (pair) index measured in the complete set.

FIG. 6 illustrates another schematic diagram of a neural network model applicable for embodiments of the disclosure. The model is a model for prediction of top beam quality, and may be considered as a linear regression problem. The input-output relationship of the model is: the relationship from the L1-RSRPs of a partial subset as input to the L1-RSRP of K top beams (pairs). The input part of the model is the same as the input of the model illustrated in FIG. 5, except that the output of the model is K (K ≥ 1) top L1-RSRPs, and K beam (pair) indexes corresponding to the K top L1-RSRPs. In the example of FIG. 6, the number of beams (pairs) in the Set B is T. The label(s) used by the model is K top L1-RSRPs measured in the complete set, and corresponding K beam (pair) indices.

It should be understood that the output of the model may also be understood as an inference or prediction result, that is, "inference" and "prediction" may have the same meaning and may be replaced with each other.

For convenience of understanding the technical solution of the embodiments of the disclosure, the technical solution of the disclosure will be described in detail via particular embodiments. Any combination formed by the above relevant technologies as optional solutions and the technical solutions of the embodiments of the disclosure shall fall within the scope of protection of the embodiments of the disclosure. The embodiments of the disclosure include at least part of the following content.

It should be noted that the "beam (pair)" in the embodiments of the disclosure may refer to a beam, including a transmitting beam or a receiving beam, or may refer to a beam pair, such as a pair of a transmitting beam and a receiving beam. The meaning of "beam (pair)" in the embodiments of the disclosure is applicable to the case of downlink transmission. The "beam (pair)" in the embodiments of the disclosure may also be referred to as a spatial filter, that is, "beam (pair)" and "spatial filter" may be replaced with each other.

It is to be noted that, the "downlink reference signal resource index" in the embodiments of the disclosure may also be referred to as a beam (pair) index, a downlink reference signal index, or a spatial filter index. That is, "downlink reference signal resource index", "beam (pair) index", "downlink reference signal index", and "spatial filter index" may be replaced with each other. Exemplarily, the downlink reference signal resource index may be a CSI-RS resource indicator (CRI) or an SSB resource indicator (SSBRI).

It is to be noted that, the downlink reference signal in the embodiments of the disclosure may include a Channel State Information-Reference Signal (CSI-RS) and/or an SSB. A measurement result obtained by measuring a downlink reference signal represents a link quality. In some implementations, the link quality may include at least one of: a Reference Signal Receiving Power (RSRP) (such as L1-RSRP), a Signal to Interference plus Noise Ratio (SINR) (such as L1-SINR), a Received Signal Strength Indicator (RSSI) (such as L1-RSSI), or a Reference Signal Receiving Quality (RSRQ) (such as L1-RSRQ).

Firstly, a first downlink reference signal set, a second downlink reference signal set, and a third downlink reference signal set are defined.

The first downlink reference signal set is a Set B, the second downlink reference signal set is a Set C, and the third downlink reference signal set is a Set A. The "downlink reference signal set" may be understood as a set of downlink reference signals, a set of downlink reference signal resources, or a set of beams (pairs). Therefore, the "downlink reference signal set" may also be referred to as a "downlink reference signal resource set" or a "beam (pair) set".

In some scenarios, the Set B may be a subset of the Set A; in this case, the Set B may be understood as a partial subset of beams (pairs), and the Set A may be understood as a complete set of beams (pairs). In some other scenarios, the Set B and the Set A may also be two different beam (pair) sets. Exemplarily, the Set B may serve as a measurement set and the Set A may serve as a prediction set. In the embodiments of the disclosure, the neural network model (referred to as a model for short) may perform beam prediction in the Set A by measuring the beam(s) in the Set B.

In some scenarios, the Set B is a measurement set, which is also an input set of the model. In some other scenarios, the Set C is a measurement set, and top M beams (pairs) are selected from the Set C as the Set B which is the input set of the model. That is, the Set B is a subset of the Set C.

Secondly, a first model and a second model are defined.

The first model is a model on the network device side (which may also be referred to as a model on the NW side), or the first model is a model deployed on the network device side. The first model is used for downlink beam (pair) prediction. Specifically, the first model is used for predicting target downlink reference signal(s) and/or target link quality(s). The target downlink reference signal(s) includes K downlink reference signals corresponding to top K beams (pairs) in the Set A. The target link quality(s) includes K link qualities corresponding to the top K beams (pairs) in the Set A. The first model may implement spatial-domain beam prediction or temporal beam prediction. The input of the first model is: a measurement result of the Set B or a partial measurement result of the Set C (such as the measurement results of the top M beams (pairs) in the Set C). The output of the first model is at least one of: top K beam (pair) indices in the Set A, top K L1-RSRPs in the Set A, or K beam (pair) indices corresponding to the top K L1-RSRPs.

The second model is a model on the terminal side (which may also be referred to as a model on the UE side), or the second model is a model deployed on the terminal side. The second model is used for downlink beam (pair) prediction. Specifically, the second model is used for predicting target downlink reference signal(s) and/or target link quality(s). The target downlink reference signal(s) includes K downlink reference signals corresponding to top K beams (pairs) in the Set A. The target link quality(s) includes K link qualities corresponding to the top K beams (pairs) in the Set A. The second model may implement spatial-domain beam prediction or temporal beam prediction. The input of the second model is: a measurement result of the Set B or a partial measurement result of the Set C (such as the measurement results of the top M beams (pairs) in the Set C). The output of the second model is at least one of: top K beam (pair) indices in the Set A, top K L1-RSRPs in the Set A, or K beam (pair) indices corresponding to the top K L1-RSRPs.

It is to be noted that the second model may be an initial model (which may also be referred to as a meta-model) that does not need to be trained from scratch relative to the first model, and may be a pre-trained model. Therefore, compared with the first model, tuning of the second model can be realized with the need of only a small amount of data, that is, the second model is fine-tuned through a small amount of data.

For example, the first model and the second model may be the neural network model illustrated in FIG. 5 or FIG. 6 described above, or may be models varied based on the neural network model illustrated in FIG. 5 or FIG. 6. The specific network structures of the first model and the second model are not limited in the disclosure. The neural network model may also be referred to as an AI model or an ML model.

For the first model on the network device side, the terminal needs to report a large amount of data (which is referred to as a data set) to the network device. The terminal transmits the data set to the network device through an air interface.

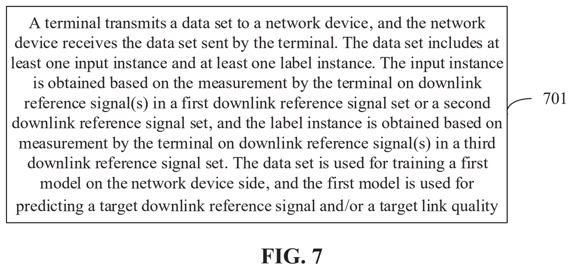

FIG. 7 illustrates a schematic flowchart of a method for data set determination according to embodiments of the disclosure. As illustrated in FIG. 7, the method includes following operation 701.

At operation 701, a terminal transmits a data set to a network device, and the network device receives the data set sent by the terminal. The data set includes at least one input instance and at least one label instance. The input instance is obtained based on measurement by the terminal on downlink reference signal(s) in a first downlink reference signal set or a second downlink reference signal set, and the label instance is obtained based on measurement by the terminal on downlink reference signal(s) in a third downlink reference signal set. The data set is used for training a first model on the network device side, and the first model is used for predicting a target downlink reference signal and/or a target link quality.

For convenience of description, in the examples involved hereinafter, the first downlink reference signal set is denoted as a Set B, the second downlink reference signal set is denoted as a Set A, and the third downlink reference signal set is denoted as a Set C. Foregoing related description may be referred to for relevant understanding of the Set A, the Set B, and the Set C. The downlink reference signal (or referred to as a downlink reference signal resource) may include, for example, a CSI-RS (or referred to as a CSI-RS resource) and/or an SSB (or referred to as an SSB resource).

### Collection of data set

### 1) Collection of input instances

In embodiments of the disclosure, the terminal measures the downlink reference signal in the first downlink reference signal set or the second downlink reference signal set to obtain at least one input instance. In some implementations, "at least one input instance" may be described as multiple input instances alternatively. In some other implementations, "at least one input instance" may be described as one input instance alternatively.

In some implementations, the terminal can obtain an input instance by measuring the downlink reference signal(s) in the first downlink reference signal set or the second downlink reference signal set for once. In some other implementations, the terminal can obtain N input instances by measuring the downlink reference signal(s) in the first downlink reference signal set or the second downlink reference signal set for N (N≥1) times.

The "input instance" in the embodiments of the disclosure may also be referred to as an input, and specifically refers to an input of a model. For the first model, the input of the model is: the measurement result of the Set B or the partial measurement result of the Set C (such as the measurement results of the top M beams (pairs) in the Set C).

Exemplarily, in once measurement for the Set B, the terminal measures each downlink reference signal in the Set B to obtain a link quality corresponding to each downlink reference signal. For example, the link quality may include, for example, at least one of: an RSRP (e.g., L1-RSRP), an SINR (e.g., L1-SINR), an RSSI (e.g., L1-RSSI), or an RSRQ (e.g., L1-RSRQ). As an input to the first model, the measurement result of the Set B refers to the link qualities corresponding to all downlink reference signals in the Set B measured by the terminal.

Exemplarily, in once measurement for the Set C, the terminal measures each downlink reference signal in the Set C to obtain a link quality corresponding to each downlink reference signal. For example, the link quality may include, for example, at least one of: an RSRP (e.g., L1-RSRP), an SINR (e.g., L1-SINR), an RSSI (e.g., L1-RSSI), or an RSRQ (e.g., L1-RSRQ). As an input to the first model, the partial measurement result of the Set C refers to the link qualities corresponding to some of the downlink reference signals in the Set C measured by the terminal, for example, the link qualities corresponding to the top M downlink reference signals in the Set C.

### 2) Content of input instance

In embodiments of the disclosure, the content of an input instance is specified. In some embodiments, the content of the input instance may be two situations as follows:

First situation: the input instance includes M link quality measurement results. M is a positive integer.

In some embodiments, the M link quality measurement results are obtained based on the measurement by the terminal on the first downlink reference signal set.

Exemplarily, the M link quality measurement results refer to M link qualities obtained by the terminal measuring M downlink reference signals in the Set B.

In some implementations, the M link quality measurement results are input to the first model in a fixed order in the Set B, that is, the fixed order represents implicit downlink reference signal resource index information.

Exemplarily, the first model includes M input nodes, and the M link quality measurement results need to be input to the M input nodes in a fixed order in the Set B, so as to ensure that the correspondence relationship between the M link quality measurement results and the M downlink reference signal resource indices is matched. In this way, the input instance may include only the M link quality measurement results (e.g., M L1-RSRPs), and by inputting the M link quality measurement results to the first model in the fixed order in the Set B, the first model can correctly identify the downlink reference signal resource index corresponding to each link quality measurement result.

Second situation: the input instance includes M link quality measurement results and M downlink reference signal resource indices. There is a correspondence relationship between the M link quality measurement results and the M downlink reference signal resource indices. M is a positive integer.

In some embodiments, the M link quality measurement results are obtained based on the terminal measuring the first downlink reference signal set; or the M link quality measurement results are top M link quality measurement results among multiple link quality measurement results, and the multiple link quality measurement results are obtained based on the terminal measuring the second downlink reference signal set.

Exemplarily, the M link quality measurement results refer to M link qualities obtained by the terminal measuring M downlink reference signals in the Set B; or the M link quality measurement results refer to top M link qualities obtained by the terminal measuring multiple downlink reference signals in the Set C. Each link quality measurement result among the M link quality measurement results refers to a link quality measurement result corresponding to a downlink reference signal (or downlink reference signal resource). Therefore, the M link quality measurement results have a correspondence relationship with the M downlink reference signal resource indices, and the correspondence relationship is a one-to-one relationship.

Since the input instance contains M downlink reference signal resource indices, it can be understood that the input instance provides explicit downlink reference signal resource index information.

Exemplarily, the first model includes M input nodes. The M link quality measurement results (e.g., M L1-RSRPs) and corresponding M downlink reference signal resource indices (e.g., M CRIs or SSBRIs) may be input to the M input nodes in any order, and the corresponding relationship between the M link quality measurement results and the M downlink reference signal resource indices is always matched regardless of the order. In this way, the input instance includes M link quality measurement results (e.g., M L1-RSRPs) and corresponding M downlink reference signal resource indices (e.g., M CRIs or SSBRIs), so that the first model can correctly identify the downlink reference signal resource index corresponding to each link quality measurement result.

The above first situation of the content of the input instance may be referred to as input 1 for short. The above second situation of the content of the input instance may be referred to as input 2 for short.

The input 1 includes M link quality measurements (e.g., M L1-RSRPs). In this case, the Set B is a fixed measurement set configured and activated by the network device.

The input 2 includes M link quality measurement results (e.g., M L1-RSRPs) and corresponding M downlink reference signal resource indices (e.g., M CRIs or SSBRIs). In this case, the Set B is a variable measurement set according to a preset pattern, or the Set B is the top M downlink reference signals measured in the Set C.

Here, the case that the Set B is a variable measurement set according to a preset pattern may be understood in the following way: measurement sets of multiple patterns are preset, and the measurement sets of different patterns include different downlink reference signals; and the Set B can flexibly change among the measurement sets of different patterns.

Here, the case that the Set B is the top M downlink reference signals measured in the Set C may be understood in the following way: the top M downlink reference signals obtained by measuring multiple downlink reference signals in the Set C form the Set B, and the Set B is used as an input set of the model.

### 3) Collection of label instance

In embodiments of the disclosure, the terminal measures the downlink reference signal(s) in the third downlink reference signal set to obtain at least one label instance. In some implementations, "at least one label instance" may be described as multiple label instances alternatively. In some other implementations, "at least one label instance" may be described as one label instance alternatively.

In some implementations, the terminal can obtain a label instance by measuring the downlink reference signal(s) in the third downlink reference signal set for once. In some other implementations, the terminal can obtain P label instances by measuring the downlink reference signal(s) in the third downlink reference signal set for P (P≥1) times.

The "label instance" in the embodiments of the disclosure may also be referred to as a label, and specifically refers to a label corresponding to an input of a model. For the first model, the label corresponding to the input of the model includes at least one of following: a top downlink reference signal resource index in the Set A, top K (K ≥ 1) link quality measurement results in the Set A, or K downlink reference signal resource indices corresponding to top K (K ≥ 1) link quality measurement results in the Set A.

Exemplarily, in a measurement for the Set A, the terminal measures each downlink reference signal in the Set A, selects a top downlink reference signal resource index in the Set A as a label of the first model, and/or selects top K (K ≥ 1) link quality measurement results and/or K corresponding downlink reference signal resource indices in the Set A as labels of the first model. For example, the link quality may include, for example, at least one of: an RSRP (e.g., L1-RSRP), an SINR (e.g., L1-SINR), an RSSI (e.g., L1-RSSI), or an RSRQ (e.g., L1-RSRQ).

### 4) Content of label instance

In embodiments of the disclosure, the content of a label instance is specified. In some embodiments, the content of the label instance may be two situations as follows:

First situation: the label instance includes a first label. The first label includes a downlink reference signal resource index satisfying a first condition, and the downlink reference signal resource index satisfying the first condition is determined based on the terminal measuring the downlink reference signal(s) in the third downlink reference signal set.

In some implementations, the downlink reference signal resource index satisfying the first condition is: a downlink reference signal resource index that corresponds to atop link quality measurement result obtained by the terminal measuring the downlink reference signal(s) in the third downlink reference signal set.

Exemplarily, the terminal measures each downlink reference signal in the Set A, selects a top downlink reference signal resource index in the Set A (i.e., the downlink reference signal resource index corresponding to the top link quality measurement result) as the first label.

Second situation: the label instance includes a first label and a second label. The first label includes a downlink reference signal resource index satisfying a first condition, and the downlink reference signal resource index satisfying the first condition is determined based on the terminal measuring the downlink reference signal(s) in the third downlink reference signal set. The second label includes K link quality measurement results satisfying a second condition and/or K downlink reference signal resource indices satisfying the second condition. There is a correspondence relationship between the K link quality measurement results and the K downlink reference signal resource indices. The K link quality measurement results satisfying the second condition are determined based on the terminal measuring the downlink reference signal in the third downlink reference signal set. K is a positive integer.

In some implementations, the downlink reference signal resource index satisfying the first condition refers to: a downlink reference signal resource index that corresponds to a top link quality measurement result obtained by the terminal measuring the downlink reference signal(s) in the third downlink reference signal set.

In some implementations, the K link quality measurement results satisfying the second condition refer to: top K link quality measurement results obtained by the terminal measuring the downlink reference signal(s) in the third downlink reference signal set.

Exemplarily, the terminal measures each downlink reference signal in the Set A, selects a top downlink reference signal resource index in the Set A (i.e., the downlink reference signal resource index corresponding to the top link quality measurement result) as the first label, and selects top K (K ≥ 1) link quality measurement results and/or corresponding K downlink reference signal resource indices in the Set A as the second label.

The above first label may be referred to as label 1 for short. The above second label may be referred to as label 2 for short.

In the label 1, the top downlink reference signal resource index in the Set A (that is, the optimalTop-1 downlink reference signal resource index in the Set A) may be predicted using a multi-classification model.

In the label 2, the top K (K ≥ 1) link quality measurement results and/or the corresponding K downlink reference signal resource indices in the Set A (that is, the optimal Top-K (K ≥ 1) link quality measurement results and/or the corresponding K downlink reference signal resource indices in the Set A) may be predicted using linear regression.

A complete sample needs to contain a label instance and an input instance. In some embodiments, to reduce the overhead of data collection, a sample may be one of following multiples combinations of label instance and input instance:
Combination A of label instance and input instance: label 1 + input 1
Combination B of label instance and input instance: label 1 + input 2
Combination C of label instance and input instance: label 1 + label 2 + input 1
Combination D of label instance and input instance: label 1 + label 2 + input 2

It is to be noted that, the label 1 is used for prediction of the downlink reference signal resource index, and must be contained in the sample. The label 2 is used for prediction of a link quality (e.g. L1-RSRP) and may be optionally contained in the sample.

### Reporting format of data set

In some implementations, for M link quality measurement results in the input instance, the M link quality measurement results are in a first format or a second format in the input instance.

The first format includes the M link quality measurement results.

The second format includes a first link quality measurement result and M-1 differential values. The first link quality measurement result is one of the M link quality measurement results, and the M-1 differential values are differential values between M-1 link quality measurement results of the M link quality measurement results other than the first link quality measurement result and the first link quality measurement result.

In the above first format, the M link quality measurement results are not reported in form of differentials.

In the above second format, the M link quality measurement results are reported in form of differentials. In some implementations, the first link quality measurement result may be a top one of the M link quality measurement results, or any one of the M link quality measurement results.

In some implementations, the second format may further include a downlink reference signal resource index corresponding to the first link quality measurement result.

In some implementations, the K link quality measurement results in the label instance (for the case that the label instance contains K link quality measurement results) are in a third format or a fourth format in the label instance.

The third format includes the K link quality measurement results.

The fourth format includes a second link quality measurement result and K-1 differential values. The second link quality measurement result is one of the K link quality measurement results, and the K-1 differential values are differential values between K-1 link quality measurement results of the K link quality measurement results other than the second link quality measurement result and the second link quality measurement result.

In the above third format, the K link quality measurement results are not reported in form of differentials.

In the above fourth format, the K link quality measurement results are reported in form of differentials. In some implementations, the second link quality measurement result may be a top one of the K link quality measurement results, or any one of the K link quality measurement results.

In embodiments of the disclosure, the terminal transmits the data set to the network device through an air interface. In some embodiments, the data set is carried in at least one of following signaling: radio resource control (RRC) signaling, uplink control information (UCI), or a media access control (MAC) layer container.

### 1) The dataset is carried in RRC signaling

RRC signaling in a control plane is high-layer signaling, and has a property of a large carrying capacity. Therefore, a data set of a large amount can be transmitted through RRC signaling.

### 2) The dataset is carried in UCI

UCI in a physical layer has a property of a small delay. Therefore, low-delay transmission can be realized by using UCI to carry a data set.

As an example, some UCI reporting formats used in data sets are given below. It is to be noted that, the downlink reference signal resource index (CRI or SSBR) may be replaced with a downlink reference signal index, a beam (pair) index, or a spatial filter index.

In Table 1 below, a UCI reporting format for a sample A is given. The sample A includes a label 1 and an input 1. The M RSRPs of the input 1 are given in the fixed order in Set B, and are not reported in form of differentials.

**Table 1: UCI reporting format I of sample A**

| CSI report number | CSI Fields |
|---|---|
| | Top CRI or SSBRI in Set A, if reported |
| CSI report # n | RSRP # 1, if reported |
| | RSRP # 2, if reported |
| | ... |
| | RSRP # M, if reported |

In Table 2 below, another UCI reporting format for a sample A is given. The sample A includes a label 1 and an input 1. The M RSRPs of the input 1 are given in the fixed order in Set B, and are not reported in form of differentials. In Table 2, RSRP # 1 corresponding to the top CRI or SSBRI in the Set B may be placed at a former position, and RSRPs (RSRP # 2 to RSRP # M) corresponding to other CRIs or SSBRIs in the Set B are reported in form of differentials with reference to RSRP # 1.

**Table 2: UCI reporting format II of sample A**

| CSI report number | CSI Fields |
|---|---|
| | Top CRI or SSBRI in Set A, if reported |
| | Top CRI or SSBRI in Set B, if reported |
| CSI report # n | RSRP # 1 in Set B, if reported |
| | Differential RSRP # 2 in Set B, if reported |
| | ... |
| | Differential RSRP # M in Set B, if reported |

In Table 3 below, a UCI reporting format for a sample B is given. The sample B includes a label 1 and an input 2. The input 2 contains M RSRPs of the Set B or the Set C and corresponding CRIs or SSBRIs. The M RSRPs of the input 2 are reported in form of differentials. Because there is a CRI or SSBRI in this format, there is no need to additionally report the top CRI or SSBRI in the Set B.

**Table 3: UCI reporting format for sample B**

| CSI report number | CSI Fields |
|---|---|
| CSI report # n | Top CRI or SSBRI in Set A, if reported |
| | CRI or SSBRI # 1 in Set B or Set C, if reported |
| | CRI or SSBRI # 2 in Set B or Set C, if reported |
| | ... |
| | CRI or SSBRI # M in Set B or Set C, if reported |
| | RSRP # 1, if reported |
| | Differential RSRP # 2, if reported |
| | ... |
| | Differential RSRP # M, if reported |

In Table 4 below, a UCI reporting format for a sample C is given. Relative to the sample A, a label 2 is added to the sample C. That is, the sample C includes the label 1, the label 2 and the input 1. The M RSRPs of the input 1 are given in the fixed order in the Set B, and are not reported in form of differentials. K RSRPs of the label 2 are given in a fixed order in the Set A, and are reported in form of differentials.

**Table 4: UCI reporting format I of sample C**

| CSI report number | CSI Fields |
|---|---|
| | Top CRI or SSBRI in Set A, if reported |
| | RSRP # 1 in Set A, if reported |
| | Differential RSRP # 2 in Set A, if reported |
| | ... |
| CSI report # n | Differential RSRP # K in Set A, if reported |
| | RSRP # 1 in Set B, if reported |
| | RSRP # 2 in Set B, if reported |
| | ... |
| | RSRP # M in Set B, if reported |

In Table 5 below, another UCI reporting format of the sample C is given. In this format, M RSRPs of the input 1 are given in a fixed order in the Set B, and are reported in form of differentials. K RSRPs of the label 2 are given in a fixed order in the Set A, and are reported in form of differentials.

**Table 5: UCI reporting format II of sample C**

| CSI report number | CSI Fields |
|---|---|
| | Top CRI or SSBRI in Set A, if reported |
| | RSRP # 1 in Set A, if reported |
| | Differential RSRP # 2 in Set A, if reported |
| | ... |
| CSI report # n | Differential RSRP # K in Set A, if reported |
| | Top CRI or SSBRI in Set B, if reported |
| | RSRP # 1 in Set B, if reported |
| | Differential RSRP # 2 in Set B, if reported |
| | ... |
| | Differential RSRP # M in Set B, if reported |

In Table 6 below, a UCI reporting format for a sample D is given. The sample D includes a label 1, a label 2 and an input 2. In this format, M RSRPs of the input 2 are reported in form of differentials. K RSRPs of the label 2 are given in a fixed order in the Set A, and are reported in form of differentials.

**Table 6: UCI reporting format for sample D**

| CSI report number | CSI Fields |
|---|---|
| | Top CRI or SSBRI in Set A, if reported |
| | RSRP # 1 in Set A, if reported |
| | Differential RSRP # 2 in Set A, if reported |
| | ... |
| | Differential RSRP # K in Set A, if reported |
| | CRI or SSBRI # 1 in Set B or Set C, if reported |
| CSI report # n | CRI or SSBRI # 2 in Set B or Set C, if reported |
| | ... |
| | CRI or SSBRI # M in Set B or Set C, if reported |
| | RSRP # 1, if reported |
| | Differential RSRP # 2, if reported |
| | ... |
| | Differential RSRP # M, if reported |

It is to be noted that the above Tables 1 to 6 are merely exemplary descriptions, and the technical solutions of the embodiments of the disclosure are not limited to the illustration the above Tables 1 to 6. Therefore, there may be other types of UCI reporting formats according to the concept of the technical solutions of the embodiments of the disclosure.

### 3) The dataset is carried in a MAC layer container

The MAC layer container has a fixed format, with 8 bits as a basic unit (i.e. a byte), and has a variable byte length. The MAC layer container has properties of a small delay, a medium carrying capacity, and having an error control mechanism (supporting retransmission after error of a MAC control element (MAC CE)).

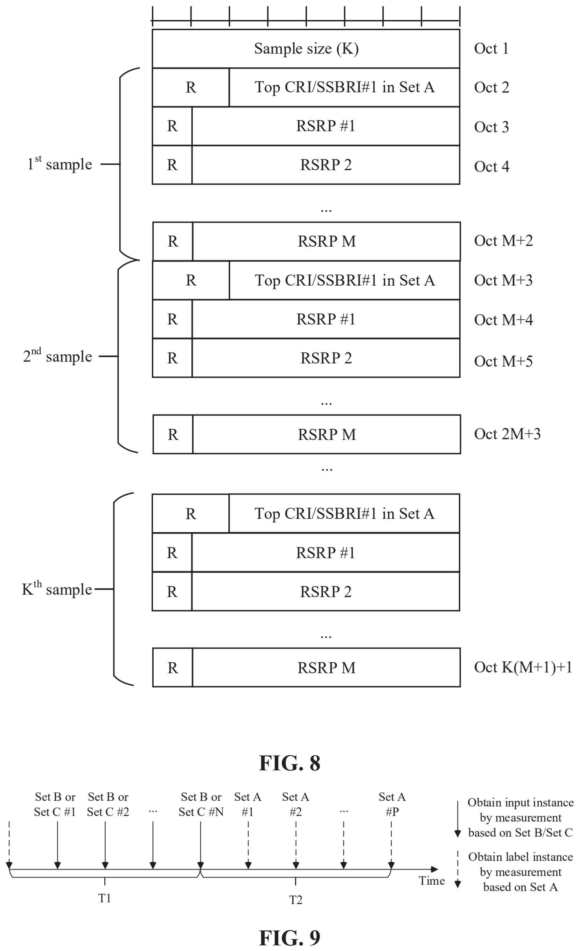

As an example, FIG. 8 illustrates a format of a MAC layer container. It is to be noted that, the downlink reference signal resource index (CRI or SSBR) may be replaced with a downlink reference signal index, a beam (pair) index, or a spatial filter index. In FIG. 8, K samples are contained. In some implementations, the maximum value of K may be designed to be the 8^{th} power of 2, i.e., 256. The top CRI or SSBRI in the Set A occupies 6 bits, and the 6 bits can support up to 64 CSI-RS resources or SSB resources to be included in the Set A.

It is to be noted that, in the example of FIG. 8, the sample is composed of a label 1 and an input 1. Other combinations of label and input may also be carried using a MAC layer container. That is, the technical solution of the embodiments of the disclosure is not limited to the illustration in FIG. 8, and there may be other forms according to the concept of the technical solution of the embodiments of the disclosure.

### Configuration of downlink reference signal set

The network device may configure the first downlink reference signal set or the second downlink reference signal set for the terminal and/or configure the third downlink reference signal set for the terminal. The network device transmits first configuration information and/or second configuration information to the terminal, and the terminal receives the first configuration information and/or the second configuration information from the network device. The first configuration information is used for configuring at least one first downlink reference signal set or at least one second downlink reference signal set. The second configuration information is used for configuring at least one third downlink reference signal set.

As an implementation, the first configuration information and/or the second configuration information are carried in RRC signaling.

In some implementations, in a case that the first configuration information is used for configuring one first downlink reference signal set or one second downlink reference signal set, the one first downlink reference signal set or the one second downlink reference signal set is used for obtaining input instance(s). In some other implementations, in a case that the first configuration information is used for configuring multiple first downlink reference signal sets or multiple second downlink reference signal sets, the network device transmits first indication information to the terminal, and the terminal receives the first indication information sent by the network device. The first indication information is used for instructing to activate one of the multiple first downlink reference signal sets or one of the multiple second downlink reference signal sets, and the one of the multiple first downlink reference signal sets or the one of the multiple second downlink reference signal sets is used for obtaining input instance(s).

As an implementation, the first indication information is carried in a MAC CE or DCI.

Exemplarily, the network device configures J (J ≥ 1) Sets B or Sets C for the terminal by using RRC signaling. A Set Bj or Set Cj is a Set B or Set C identified as j among the J Sets B or Sets C, 1 ≤ j ≤ J. If the network device configures only one Set B or Set C (i.e., J = 1), there is no need to activate this Set B or Set C. This Set B or Set C is active by default and can be used to obtain input instance(s). If the network device configures multiple Sets B or Sets C (i.e., J > 1), the network device needs to use a MAC CE or DCI to activate one Set B or Set C among multiple configurations according to an actual deployment situation and antenna configuration situation, and the activated Set B or Set C can be used to obtain an input instance.

In some implementations, in a case that the second configuration information is used for configuring one third downlink reference signal set, the one third downlink reference signal set is used for obtaining the at least one label instance. In some other implementations, in a case that the second configuration information is used for configuring multiple third downlink reference signal sets, the method further includes that the network device transmits second indication information to the terminal and the terminal receives the second indication information sent by the network device. The second indication information is used for instructing to active one of the multiple third downlink reference signal sets, and the one of the multiple third downlink reference signal sets is used for obtaining label instance(s).

As an implementation, the second indication information is carried in a MAC CE or DCI.

Exemplarily, the network device configures S (S ≥ 1) Sets A for the terminal using RRC signaling. Set As is the Set A identified as s among the S Sets A, 1 ≤ s ≤ S. If the network device configures only one Set A (i.e., S = 1), there is no need to activate this Set A. This Set A is active by default and can be used to obtain label instance(s). If the network device configures multiple Sets A (i.e., S > 1), the network device needs to use a MAC CE or DCI to activate one Set A among multiple configurations according to the actual deployment situation and antenna configuration situation, and the activated Set A can be used to obtain label instance(s).

In some implementations, the first configuration information and/or the second configuration information are related to capability information of the terminal. According to capability information of the terminal, the network device configures at least one first downlink reference signal set or at least one second downlink reference signal set for the terminal and/or configures at least one third downlink reference signal set for the terminal.

Exemplarily, the network device configures J (J ≥ 1) Sets B or Sets C for the terminal according to the capability information reported by the terminal. Optionally, in a case of J > 1, the network device further activates one Set B or Set C among the J Sets B or Sets C.

Exemplarily, the network device configures S (S ≥ 1) Sets A for the terminal according to the capability information reported by the terminal. Optionally, in a case of S > 1, the network device further activates one Set A among the S Sets A.

### Terminal capability reporting

Different terminals have different capabilities for data collection. Therefore, the terminal needs to report its capabilities of collecting data for the device.

In some implementations, the terminal transmits the capability information of the terminal to the network device, and the network device receives the capability information of the terminal sent by the terminal. The capability information of the terminal includes at least one of following: first information, second information, third information, fourth information, fifth information, sixth information, seventh information, seventh information, eighth information, or ninth information.

The first information is used for indicating whether the terminal supports collection of a data set for predicting the target downlink reference signal and/or the target link quality.

The second information is used for indicating a maximum number of first downlink reference signal sets or second downlink reference signal sets supported by the terminal over all downlink carrier components (CCs) or bandwidth parts (BWPs).

The third information is used for indicating a maximum number of first downlink reference signal sets or second downlink reference signal sets supported by the terminal on each downlink CC or BWP.

The fourth information is used for indicating a maximum number of downlink reference signal resources supported by the terminal in all first downlink reference signal sets or all second downlink reference signal sets.

The fifth information is used for indicating a maximum number of downlink reference signal resources supported by the terminal in each first downlink reference signal set or each second downlink reference signal set.

The sixth information is used for indicating a maximum number of third downlink reference signal sets supported by the terminal over all downlink CCs or BWPs.

The seventh information is used for indicating a maximum number of third downlink reference signal sets supported by the terminal on each downlink CC or BWP.

The eighth information is used for indicating a maximum number of downlink reference signal resources supported by the terminal in all third downlink reference signal sets.

The ninth information is used for indicating a maximum number of downlink reference signal resources supported by the terminal in each third downlink reference signal set.

The capability indicated by the above first information may be denoted as capability 1. Similarly, the capability indicated by the second information may be denoted as capability 2. The capability indicated by the third information may be denoted as capability 3. The capability indicated by the fourth information may be denoted as capability 4. The capability indicated by the fifth information may be denoted as capability 5. The capability indicated by the sixth information may be denoted as capability 6. The capability indicated by the seventh information may be denoted as capability 7. The capability indicated by the eighth information may be denoted as capability 8. The capability indicated by the ninth information may be denoted as capability 9.

Exemplarily, the capability 2 may be understood as the maximum number of measurement sets of Sets B or Sets C that the terminal can support on all downlink CCs or BWPs for acquiring input instances.

Exemplarily, the capability 3 may be understood as the maximum number of measurement sets of Sets B or Sets C that the terminal can support on one downlink CC or BWP for acquiring input instances.

Exemplarily, the capability 4 may be understood as the maximum number of SSB resources and/or CSI-RS resources for measurement that can be supported by the terminal in all measurement sets of Sets B or Sets C.

Exemplarily, the capability 5 may be understood as the maximum number of SSB resources and/or CSI-RS resources for measurement that can be supported by the terminal in one measurement set of Set B or Set C.

Exemplarily, the capability 6 may be understood as the maximum number of measurement sets of Sets A that the terminal can support on all downlink CCs or BWPs for acquiring label instances.

Exemplarily, the capability 7 may be understood as the maximum number of measurement sets of Sets A that the terminal can support on one downlink CC or BWP for acquiring label instances.

Exemplarily, the capability 8 may be understood as the maximum number of SSB resources and/or CSI-RS resources for measurement that can be supported by the terminal in all measurement sets of Sets A.

Exemplarily, the capability 9 may be understood as the maximum number of SSB resources and/or CSI-RS resources for measurement that can be supported by the terminal in one measurement set of Set A.

In some implementations, the first information is used to indicate whether the terminal supports collection of a data set. As an implementation, the first information is used to indicate whether the terminal supports collection of a data set for predicting the target downlink reference signal and/or the target link quality. As another implementation, the first information indicates whether the terminal supports collection of a data set for spatial-domain downlink beam (pair) prediction (BM-Case1) and/or temporal downlink beam (pair) prediction (BM-Case2).

In some implementations, the capability information of the terminal includes the above first information. Optionally, when the first information indicates that the terminal supports collection of a data set, the capability information of the terminal may include at least one of the second information to the ninth information described above.

In some implementations, the capability information of the terminal includes at least one of the first information to the ninth information described above.

### Composition of sample

### 1) Sample composition mode 1

In some implementations, an input instance and a label instance in the data set constitute a sample for training the first model.

Exemplarily, for spatial-domain downlink beam (pair) prediction (BM-Case1), a sample of the first model includes one input instance and one label instance.

### 2) Sample composition mode 2

In some implementations, N input instances and P label instances in the data set constitute a sample for training the first model, and the N input instances and the P label instances are obtained by the terminal in a time division manner, N and P being positive integers.

Exemplarily, for temporal downlink beam (pair) prediction (BM-Case2), a sample of the first model includes N input instances and P label instances, N≥1 and P≥1.

In some implementations, the N input instances are in a fifth format or a sixth format in the sample.

The fifth format includes: the N input instances. Ranking of the N input instances in the sample is related to a temporal order of the N input instances.

The sixth format includes: the N input instances and N instance numbers. There is a correspondence relationship between the N input instances and the N instance numbers, and the N instance numbers are related to the temporal order of the N input instances.

In some implementations, the P label instances are in a seventh format or an eighth format in the sample.

The seventh format includes: the P label instances. Ranking of the P label instances in the sample is related to a temporal order of the P label instances.

The eighth format includes: the P label instances and P instance numbers. There is a correspondence relationship between the P label instances and the P instance numbers, and the P instance numbers are related to the temporal order of the P label instances.

For the temporal downlink beam (pair) prediction (BM-Case2), the temporal relationship of samples needs to be reflected during sample collection. In some implementations, the temporal relationship of N input instances and P label instances in the sample during collection may be implemented in the following two ways:
Scheme 1): the N input instances are obtained by the terminal performing N times of measurement on the downlink reference signal(s) in the first downlink reference signal set or the second downlink reference signal set in a first period, and the P label instances are obtained by the terminal performing P times of measurement on the downlink reference signal(s) in the third downlink reference signal set in a second period.

In this scheme, the terminal performs the N times of measurement on the downlink reference signal(s) in the first downlink reference signal set or the second downlink reference signal set in the first period, to obtain the N input instances corresponding to the first period; and the terminal performs the P times of measurement on the downlink reference signal(s) in the third downlink reference signal set in the second period, to obtain the P label instances corresponding to the second period.

In some implementations, the terminal transmits the data set to the network device according to a first reporting unit. The first reporting unit includes the N input instances corresponding to the first period and the P label instances corresponding to the second period.

As an example, a data set collection process is described illustratively below in conjunction with Scenario 1 illustrated in FIG. 9. During a period T1, the terminal performs N times of measurement on the Set B or Set C, to obtain N input instances as an input of the model. During a period T2, the terminal performs P times of measurement on the Set A, to obtain P label instances as labels of the model.

During the measurement in the period T1, an input instance is obtained by each measurement performed by the terminal on the Set B or Set C configured by the network device, and the input instances obtained by N times of measurement may be identified as:
{Input instance 1, Input instance 2, ..., Input instance N}.

For each input instance, the collection of the input instance, and the content of the input instance may refer to the aforementioned related schemes, and the aforementioned schemes related to "collection of input instance" and "content of input instance" may be combined herewith in implementation.

During the measurement in the period T2, a label instance is obtained by each measurement performed by the terminal on the Set A configured by the network device, and the label instances obtained by P times of measurement may be identified as:
{Label instance 1, Label instance 2,..., Label instance P}.

For each label instance, the collection of the label instance, and the content of the label instance may refer to the aforementioned related schemes, and the aforementioned schemes related to "collection of label instance" and "content of label instance" may be combined herewith in implementation.

Among the N input instances, the temporal order (which may also be understood as measurement time) of the input instances may be expressed implicitly by the order in which the input instances appear in the sample, or may be expressed explicitly by adding an instance number to each input instance. Similarly, among the P label instances, the temporal order of the label instances may be implicitly expressed by the order in which the label instances appear in the sample, or may be expressed explicitly by adding an instance number to each label instance. As an implementation, in one sample, the input instance is positioned at a former position and the label instance is positioned at a latter position. As another implementation, in one sample, the input instance is located at a latter position and the label instance is located at a former position.

It is to be noted that there is no need to mark the sequential order of samples. Because the model needs to make calculation for the samples in parallel during training, there is no need to consider the sequential order between samples.

Exemplarily, some sample formats are given below, with reporting a data set by UCI as an example. It is to be noted that, the downlink reference signal resource index (CRI or SSBR) may be replaced with a downlink reference signal index, a beam (pair) index, or a spatial filter index.

In Table 7 below, a UCI reporting format of Scenario 1 is given. In this format, the temporal order of input instances is expressed implicitly by the order in which input instances appear in the sample, and the temporal order of label instances is expressed implicitly by the order in which label instances appear in the sample. Here, description is made with the sample including an input 1 and a label 1 as an example.

**Table 7: UCI reporting format 1 of Scenario 1**

| CSI report number | CSI Fields |
|---|---|
| CSI report # n | RSRP # 1 of 1^{st} input instance, if reported |
| | RSRP # 2 of 1^{st} input instance, if reported |
| | ... |
| | RSRP # M of 1^{st} input instance, if reported |
| | RSRP # 1 of 2^{nd} input instance, if reported |
| | RSRP # 2 of 2^{nd} input instance, if reported |
| | ... |
| | RSRP # M of 2^{nd} input instance, if reported |
| | ... |
| | RSRP # 1 of N^{th} input instance, if reported |
| | RSRP # 2 of N^{th} input instance, if reported |
| | ... |
| | RSRP # M of N^{th} input instance, if reported |
| | Top CRI or SSBRI in Set A of 1^{st} label instance, if reported |
| | Top CRI or SSBRI in Set A of 2^{nd} label instance, if reported |
| | ... |
| | Top CRI or SSBRI in Set A of P^{th} label instance, if reported |

In Table 8 below, another UCI reporting format for Scenario 1 is given. In this format, the temporal order of input instances is expressed explicitly by the instance numbers, and the temporal order of label instances is expressed explicitly by the instance numbers. Here, description is made with the sample including an input 1 and a label 1 as an example.

**Table 8: UCI reporting format 2 of Scenario 1**

| CSI report number | CSI Fields |
|---|---|
| | Index of 1^{st} input instance |
| | RSRP # 1, if reported |
| | RSRP # 2, if reported |
| | ... |
| | RSRP # M, if reported |
| | Index of 2^{nd} input instance |
| | RSRP # 1, if reported |
| | RSRP # 2, if reported |
| | ... |
| | RSRP # M, if reported |
| | ... |
| CSI report # n | Index of N^{th} input instance |
| | RSRP # 1, if reported |
| | RSRP # 2, if reported |
| | ... |
| | RSRP # M, if reported |
| | Index of 1^{st} label instance |
| | Top CRI or SSBRI in Set A, if reported |
| | Index of second label instance |
| | Top CRI or SSBRI in Set A, if reported |
| | ... |
| | Index of P^{th} label instance |
| | Top CRI or SSBRI in Set A, if reported |

Scheme 2) the N input instances are obtained by the terminal performing N times of measurement on the downlink reference signal(s) in the first downlink reference signal set or the second downlink reference signal set in N cycles, and the P label instances are obtained by the terminal performing P times of measurement on the downlink reference signal(s) in the third downlink reference signal set in a final cycle of the N cycles.

In this scheme, in each of the N cycles, the terminal performs one time of measurement on the downlink reference signal(s) in the first downlink reference signal set or the second downlink reference signal set and P times of measurement on the downlink reference signal(s) in the third downlink reference signal set to obtain one input instance and P label instances corresponding to the cycle.

In some implementations, the terminal transmits the data set to the network device according to a second reporting unit. The second reporting unit includes one input instance and P label instances corresponding to each cycle; or the second reporting unit includes the N input instances corresponding to the N cycles and the P label instances corresponding to the final cycle of the N cycles; or the second reporting unit includes all input instances and all label instances corresponding to the N cycles.

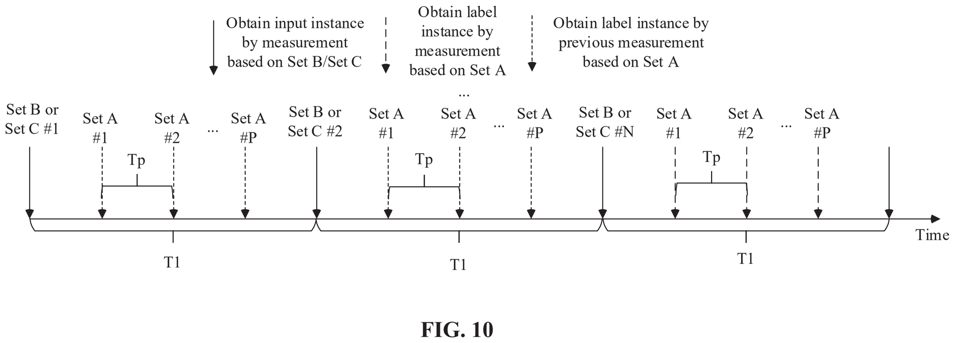

As an example, a data set collection process is described illustratively below in conjunction with Scenario 2 illustrated in FIG. 10.

In each T1 measurement cycle, the terminal makes one time of measurement on the Set B or Set C and P times of measurement on the Set A to obtain one input instance and P label instances. In N T1 measurement cycles, a total of N input instances and N × P label instances can be obtained. N input instances and P label instances form a sample, and the P label instances constituting the sample may be P label instances obtained in the final T1 measurement cycle.

For each input instance, the collection of the input instance, and the content of the input instance may refer to the aforementioned related schemes, and the aforementioned schemes related to "collection of input instance" and "content of input instance" may be combined herewith in implementation.

For each label instance, the collection of the label instance, and the content of the label instance may refer to the aforementioned related schemes, and the aforementioned schemes related to "collection of label instance" and "content of label instance" may be combined herewith in implementation.

The terminal may report the measured input instances and label instances in the following three manners.

Manner 1: the reporting unit of the terminal includes one input instance and P label instances. In this case, the terminal can perform reporting once after obtaining an input instance and P label instances by performing measurement in each T1 measurement cycle.

The temporal order (which may also be understood as measurement time) of the P label instances in the reporting unit may be expressed implicitly by the order in which the label instances appear in the sample, or may be expressed explicitly by adding an instance number to each label instance.

Exemplarily, for the implicit manner, the order of instances in the reporting unit is as follows:
Input instance n
Label instance n1
Label instance n2
Label instance nP.

Exemplarily, for the explicit manner, the order of instances in the reporting unit is as follows:
Input instance ID # n
Label instance ID # n3
Label instance ID # n1
Label instance ID # nP.

Manner 2: the reporting unit of the terminal includes N input instances and P label instances after the N^{th} input instance. In this case, the terminal can perform reporting once after obtaining N input instances and N×P label instances by performing measurement in N T1 measurement cycles.

The temporal order (which may also be understood as measurement time) of the N input instances in the reporting unit may be expressed implicitly by the order in which the input instances appear in the sample, or may be expressed explicitly by adding an instance number to each input instance. Similarly, the temporal order (which may also be understood as measurement time) of the P label instances may be expressed implicitly by the order in which the label instances appear in the sample, or may be expressed explicitly by adding an instance number to each label instance.

Exemplarily, for the implicit manner, the order of instances in the reporting unit is as follows:
Input instance 1
Input instance 2
   ...
Input instance N
Label instance N1
Label instance N2
   ...
Label instance NP.

Exemplarily, for the explicit manner, the order of instances in the reporting unit is as follows:
Input instance ID # 2
Input instance ID # N
   ...
Input instance ID # 1
Label instance ID # N3
Label instance ID # N1
   ...
Label instance ID # NP.

Manner 3: the reporting unit of the terminal includes N input instances and N×P label instances. In this case, the terminal can perform reporting once after obtaining N input instances and N×P label instances by performing measurement in N T1 measurement cycles.

The temporal order (which may also be understood as measurement time) of the N input instances in the reporting unit may be expressed implicitly by the order in which the input instances appear in the sample, or may be expressed explicitly by adding an instance number to each input instance. Similarly, the temporal order (which may also be understood as measurement time) of the N×P label instances may be expressed implicitly by the order in which the label instances appear in the sample, or may be expressed explicitly by adding an instance number to each label instance.

Exemplarily, for the implicit manner, the order of instances in the reporting unit is as follows:
Input instance 1
Label instance 11
Label instance 12
   ...
Label instance 1P
Input instance 2
Label instance 21
Label instance 22
   ...
Label instance 2P
   ...
Input instance N
Label instance N1
Label instance N2
   ...
Label instance NP.

In the technical solution of the embodiments of the disclosure, in order to train a model having a downlink beam (pair) prediction function, a method for collecting a data set is proposed, and the content and reporting format of the data set are clarified. For model training on the network device side, the network device configures and/or activates, based on terminal capability information reported by the terminal, a downlink reference signal set required for measurement, and the terminal measures the downlink reference signal set to collect a data set, and then reports the collected data set to the network device. The data set includes a combination of input instance and label instance, and provides training materials for model training.

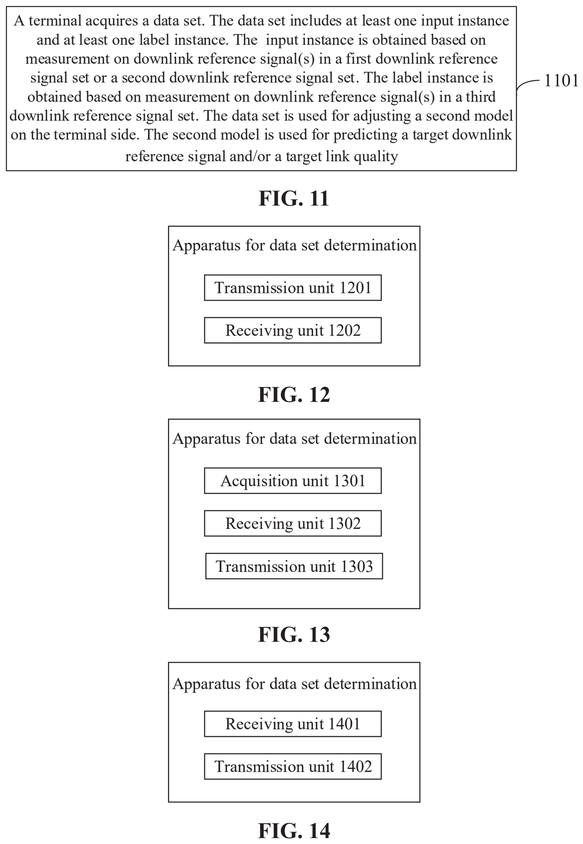

FIG. 11 illustrates a schematic flowchart of another method for data set determination according to embodiments of the disclosure. As illustrated in FIG. 11, the method includes following operation 1101.

At operation 1101, a terminal acquires a data set. The data set includes at least one input instance and at least one label instance. The input instance is obtained based on measurement on downlink reference signal(s) in a first downlink reference signal set or a second downlink reference signal set. The label instance is obtained based on measurement on downlink reference signal(s) in a third downlink reference signal set. The data set is used for adjusting a second model on the terminal side. The second model is used for predicting a target downlink reference signal and/or a target link quality.

For a second model on the terminal side, on the one hand, it is difficult for a single terminal to collect a large amount of data to complete initial training of the model; on the other hand, if the model on the terminal side is trained from scratch, the network device needs to transmit a large amount of data to the terminal, which is a significant overhead for a downlink data channel. Therefore, as an implementation, the network device transmits a trained model to the terminal, and the terminal can obtain the trained model. The network device can obtain a data set through the scheme related to FIG. 7, to complete the training of the model. As another implementation, the terminal has an initial model (which may also be referred to as a meta-model) for beam (pair) prediction. The model may be understood as a factory setting or a preset model. In order to improve the adaptability of the model to the environment in which the terminal is located and the beam configuration of the network device, that is, the generalization performance, the terminal may perform fine-tuning of the model using a small amount of data. It may be understood that the data set acquired by the terminal contains a small number of input instances and a small number of label instances.

In the embodiments of the disclosure, the terminal may acquire the data set in the following manners.

Manner 1: the terminal may acquire the data set by receiving the data set sent by a network device. The data set is all or part of a data set(s) reported to the network device by at least one terminal, and the at least one terminal includes the terminal or does not include the terminal.

In some implementations, the data set is carried in at least one of following signaling: radio resource control (RRC) signaling, or a media access control (MAC) layer container.

Exemplarily, the network device collects a data set from other terminals and transmits all or part of the collected data set(s) to the terminal through RRC signaling or a MAC layer container. As such, the terminal can obtain the data sets without performing measurement.

Manner 2: the terminal may acquire the data set by: obtaining an input instance by measuring the downlink reference signal(s) in the first downlink reference signal set or the second downlink reference signal set, and obtaining a label instance by performing measurement on the downlink reference signal(s) in the third downlink reference signal set.

Here, the terminal may obtain the data set by measuring the downlink reference signal set(s).

In some implementations, the network device may configure the downlink reference signal set(s) for the terminal. In some implementations, the network device configures the downlink reference signal set(s) for the terminal according to the terminal capability information reported by the terminal.

It is to be noted that the above understanding of the input instance and the label instance may refer to the description about FIG. 7.

It is to be noted that the above understanding that the network device may configure the downlink reference signal set(s) for the terminal may refer to the description about FIG. 7.

It is to be noted that the above understanding of the terminal capability information reported by the terminal may refer to the description about FIG. 7.

According to the technical solution of the embodiments of the disclosure, for model training on the terminal side, the network device may transmit a small amount of data to the terminal, or the terminal may obtain data through performing measurement by itself, thereby realizing fine-tuning of the model.

Preferred implementations of the disclosure are described in detail in conjunction with accompanying drawings. However, the disclosure is not limited to the particular details in the above implementations. Within the range of the technical idea of the disclosure, multiple simple variations can be made to the technical solutions of the disclosure, and these variations all fall within the scope of protection of the disclosure. For example, the particular technical features described in the above particular implementations may be combined in any suitable way without conflict. To avoid unnecessary repetition, the possible combinations are not described in the disclosure. For example, different implementations of the disclosure may also be combined arbitrarily without departing from the concept of the disclosure, which shall be considered as content disclosed by the disclosure as well. For another, without conflict, the various embodiments described in the disclosure and/or technical features of the various embodiments may be combined with the related art arbitrarily, and the technical solutions obtained via the combination shall also fall within the scope of protection of the disclosure.

It is also to be understood that, in the method embodiments of the disclosure, the sizes of the serial numbers of the above operations do not imply the sequential order in which the operations are performed, and shall not construe any limitation to the implementation of the embodiments of the disclosure. The order in which the operations are performed should be decided by their functions and internal logics. In addition, in the embodiments of the disclosure, the terms "downlink", "uplink" and "sidelink" are used for representing the transmission direction of signals or data. "Downlink" is used for representing the transmission direction of signals or data is a first direction of sending from a station to user equipment in a cell. "Uplink" is used for representing the transmission direction of signals or data is a second direction of sending from user equipment in a cell to a station. "Sidelink" is used for representing the transmission direction of signals or data is a third direction of sending from user equipment 1 to user equipment 2. For example, "downlink signal" represents that the transmission signal of the direction is the first signal. In addition, in the embodiments of the disclosure, the term "and/or" herein merely describes a relation between associated objects, representing that three relations may exist. In particular, A and/or B may represent following three cases: existence of A alone, existence of both A and B, and existence of B alone. Additionally, the character "/" generally indicates that the contextual objects are in an "or" relationship.

FIG. 12 illustrates a first schematic diagram of structural composition of an apparatus for data set determination according to embodiments of the disclosure. The apparatus is applied to a terminal. As illustrated in FIG. 12, the apparatus includes a transmission unit 1201.

The transmission unit 1201 is configured to transmit a data set to a network device. The data set includes at least one input instance and at least one label instance. The input instance is obtained based on measurement by the terminal on downlink reference signal(s) in a first downlink reference signal set or a second downlink reference signal set. The label instance is obtained based on measurement by the terminal on downlink reference signal(s) in a third downlink reference signal set. The data set is used for training a first model on the network device side. The first model is used for predicting a target downlink reference signal and/or a target link quality.

In some implementations, the apparatus further includes a receiving unit 1202. The receiving unit 1202 is configured to receive the first configuration information and/or the second configuration information from the network device. The first configuration information is used for configuring at least one first downlink reference signal set or at least one second downlink reference signal set. The second configuration information is used for configuring at least one third downlink reference signal set.

In some implementations, in a case that the first configuration information is used for configuring one first downlink reference signal set or one second downlink reference signal set, the one first downlink reference signal set or the one second downlink reference signal set is used for obtaining the input instance. Alternatively, in a case that the first configuration information is used for configuring multiple first downlink reference signal sets or multiple second downlink reference signal sets, the receiving unit 1202 is configured to receive first indication information sent by the network device. The first indication information is used for instructing to activate one of the multiple first downlink reference signal sets or one of the multiple second downlink reference signal sets, and the one of the multiple first downlink reference signal sets or the one of the multiple second downlink reference signal sets is used for obtaining the input instance.

In some implementations, in a case that the second configuration information is used for configuring one third downlink reference signal set, the one third downlink reference signal set is used for obtaining the label instance. Alternatively, in a case that the second configuration information is used for configuring multiple third downlink reference signal sets, the receiving unit 1202 is configured to receive second indication information sent by the network device. The second indication information is used for instructing to active one of the multiple third downlink reference signal sets, and the one of the multiple third downlink reference signal sets is used for obtaining the label instance.

In some implementations, the first configuration information and/or the second configuration information are related to capability information of the terminal.

In some implementations, the transmission unit 1201 is configured to transmit the capability information of the terminal to the network device. The capability information of the terminal includes at least one of following: first information used for indicating whether the terminal supports collection of a data set for predicting the target downlink reference signal and/or the target link quality; second information used for indicating a maximum number of first downlink reference signal sets or second downlink reference signal sets supported by the terminal over all downlink carrier components (CCs) or bandwidth parts (BWPs); third information used for indicating a maximum number of first downlink reference signal sets or second downlink reference signal sets supported by the terminal on each downlink CC or BWP; fourth information used for indicating a maximum number of downlink reference signal resources supported by the terminal in all first downlink reference signal sets or all second downlink reference signal sets; fifth information used for indicating a maximum number of downlink reference signal resources supported by the terminal in each first downlink reference signal set or each second downlink reference signal set; sixth information used for indicating a maximum number of third downlink reference signal sets supported by the terminal over all downlink CCs or BWPs; seventh information used for indicating a maximum number of third downlink reference signal sets supported by the terminal on each downlink CC or BWP; eighth information used for indicating a maximum number of downlink reference signal resources supported by the terminal in all third downlink reference signal sets; or ninth information used for indicating a maximum number of downlink reference signal resources supported by the terminal in each third downlink reference signal set.

In some implementations, the input instance includes M link quality measurement results; or the input instance includes M link quality measurement results and M downlink reference signal resource indices. There is a correspondence relationship between the M link quality measurement results and the M downlink reference signal resource indices. M is a positive integer.

In some embodiments, the M link quality measurement results are obtained based on measurement by the terminal on the first downlink reference signal set; or the M link quality measurement results are top M link quality measurement results among multiple link quality measurement results, and the multiple link quality measurement results are obtained based on the terminal measuring the second downlink reference signal set. M is a positive integer.

In some implementations, the M link quality measurement results are in a first format or a second format in the input instance. The first format includes the M link quality measurement results. The second format includes a first link quality measurement result and M-1 differential values. The first link quality measurement result is one of the M link quality measurement results, and the M-1 differential values are differential values of M-1 link quality measurement results of the M link quality measurement results other than the first link quality measurement result relative to the first link quality measurement result.

In some implementations, the label instance includes a first label; or the label instance includes the first label and a second label. The first label includes a downlink reference signal resource index satisfying a first condition, and the downlink reference signal resource index satisfying the first condition is determined based on measurement by the terminal on the downlink reference signal(s) in the third downlink reference signal set. The second label includes K downlink reference signal resource indices and/or K link quality measurement results satisfying a second condition. There is a correspondence relationship between the K link quality measurement results and the K downlink reference signal resource indices. The K link quality measurement results satisfying the second condition are determined based on measurement by the terminal on the downlink reference signal(s) in the third downlink reference signal set. K is a positive integer.

In some implementations, the downlink reference signal resource index satisfying the first condition refers to: a downlink reference signal resource index that corresponds to an top link quality measurement result obtained by the terminal measuring the downlink reference signal(s) in the third downlink reference signal set.

In some implementations, the K link quality measurement results satisfying the second condition refer to: top K link quality measurement results obtained by the terminal measuring the downlink reference signal(s) in the third downlink reference signal set.

In some implementations, the K link quality measurement results are in a third format or a fourth format in the label instance. The third format includes the K link quality measurement results. The fourth format includes a second link quality measurement result and K-1 differential values. The second link quality measurement result is one of the K link quality measurement results, and the K-1 differential values are differential values of K-1 link quality measurement results of the K link quality measurement results other than the second link quality measurement result relative to the second link quality measurement result.

In some implementations, the data set is carried in at least one of following signalings: radio resource control (RRC) signaling, uplink control information (UCI), or a media access control (MAC) layer container.

In some implementations, an input instance and a label instance in the data set constitute a sample for training the first model.

In some implementations, N input instances and P label instances in the data set constitute a sample for training the first model, and the N input instances and the P label instances are obtained by the terminal in a time division manner, N and P being positive integers.

In some implementations, the N input instances are in a fifth format or a sixth format in the sample. The fifth format includes: the N input instances. Ranking of the N input instances in the sample is related to a temporal order of the N input instances. The sixth format includes: the N input instances and N instance numbers. There is a correspondence relationship between the N input instances and the N instance numbers, and the N instance numbers are related to a temporal order of the N input instances.

In some implementations, the P label instances are in a seventh format or an eighth format in the sample. The seventh format includes: the P label instances. Ranking of the P label instances in the sample is related to a temporal order of the P label instances. The eighth format includes: the P label instances and P instance numbers. There is a correspondence relationship between the P label instances and the P instance numbers, and the P instance numbers are related to a temporal order of the P label instances.

In some implementations, the N input instances are obtained by the terminal performing N times of measurement on the downlink reference signal(s) in the first downlink reference signal set or the second downlink reference signal set in a first period, and the P label instances are obtained by the terminal performing P times of measurement on the downlink reference signal(s) in the third downlink reference signal set in a second period.

In some implementations, the apparatus further includes a measurement unit. The measurement unit is configured to perform the N times of measurement on the downlink reference signal(s) in the first downlink reference signal set or the second downlink reference signal set in the first period, to obtain the N input instances corresponding to the first period; and perform the P times of measurement on the downlink reference signal(s) in the third downlink reference signal set in the second period, to obtain the P label instances corresponding to the second period.

In some implementations, the transmission unit 1201 is configured to transmit the data set to the network device according to a first reporting unit. The first reporting unit includes the N input instances corresponding to the first period and the P label instances corresponding to the second period.

In some implementations, the N input instances are obtained by the terminal performing N times of measurement on the downlink reference signal(s) in the first downlink reference signal set or the second downlink reference signal set in N cycles, and the P label instances are obtained by the terminal performing P times of measurement on the downlink reference signal(s) in the third downlink reference signal set in a final cycle of the N cycles.

In some implementations, the measurement unit is configured to perform, in each of the N cycles, one time of measurement on the downlink reference signal(s) in the first downlink reference signal set or the second downlink reference signal set and P times of measurement on the downlink reference signal(s) in the third downlink reference signal set to obtain one input instance and P label instances corresponding to the each cycle.

In some implementations, the transmission unit 1201 is configured to transmit the data set to the network device according to a second reporting unit. The second reporting unit includes one input instance and P label instances corresponding to the each cycle; or the second reporting unit includes the N input instances corresponding to the N cycles and the P label instances corresponding to the final cycle of the N cycles; or the second reporting unit includes all input instances and all label instances corresponding to the N cycles.

In some implementations, the downlink reference signal includes a channel state information-reference signal (CSI-RS) and/or a synchronization signal block (SSB).

In some implementations, the link quality includes at least one of: a reference signal received power (RSRP), a signal to interference plus noise ratio (SINR), a received signal strength indicator (RSSI), or a reference signal received quality (RSRQ).

Those skilled in the art should understand that relevant description of the above apparatus for data set determination according to the embodiments of the disclosure can be understood with reference to the relevant description of the method for data set determination according to the embodiments of the disclosure.

FIG. 13 illustrates a second schematic diagram of structural composition of an apparatus for data set determination according to embodiments of the disclosure. The apparatus is applied to a terminal. As illustrated in FIG. 13, the apparatus includes an acquisition unit 1301.

The acquisition unit 1301 is configured to acquire a data set. The data set includes at least one input instance and at least one label instance. The input instance is obtained based on measurement on downlink reference signal(s) in a first downlink reference signal set or a second downlink reference signal set. The label instance is obtained based on measurement on downlink reference signal(s) in a third downlink reference signal set. The data set is used for adjusting a second model on the terminal side. The second model is used for predicting a target downlink reference signal and/or a target link quality.

In some implementations, the acquisition unit 1301 is configured to receive the data set sent by a network device. The data set is all or part of a data set reported to the network device by at least one terminal. The at least one terminal includes the terminal or does not include the terminal.

In some implementations, the data set is carried in at least one of following signalings: radio resource control (RRC) signaling, or a media access control (MAC) layer container.

In some implementations, the acquisition unit 1301 is configured to obtain the input instance by measuring the downlink reference signal(s) in the first downlink reference signal set or the second downlink reference signal set, and obtain the label instance by performing measurement on the downlink reference signal(s) in the third downlink reference signal set.

In some implementations, the apparatus further includes a receiving unit 1302. The receiving unit 1302 is configured to receive the first configuration information and/or the second configuration information from the network device. The first configuration information is used for configuring at least one first downlink reference signal set or at least one second downlink reference signal set. The second configuration information is used for configuring at least one third downlink reference signal set.

In some implementations, in a case that the first configuration information is used for configuring one first downlink reference signal set or one second downlink reference signal set, the one first downlink reference signal set or the one second downlink reference signal set is used for obtaining the input instance. Alternatively, in a case that the first configuration information is used for configuring multiple first downlink reference signal sets or multiple second downlink reference signal sets, the receiving unit 1302 is configured to receive first indication information sent by the network device. The first indication information is used for instructing to activate one of the multiple first downlink reference signal sets or one of the multiple second downlink reference signal sets, and the one of the multiple first downlink reference signal sets or the one of the multiple second downlink reference signal sets is used for obtaining the input instance.

In some implementations, in a case that the second configuration information is used for configuring one third downlink reference signal set, the one third downlink reference signal set is used for obtaining the label instance. Alternatively, in a case that the second configuration information is used for configuring multiple third downlink reference signal sets, the receiving unit 1302 is configured to receive second indication information sent by the network device. The second indication information is used for instructing to active one of the multiple third downlink reference signal sets, and the one of the multiple third downlink reference signal sets is used for obtaining the label instance.

In some implementations, the first configuration information and/or the second configuration information are related to capability information of the terminal.

In some implementations, the apparatus further includes a transmission unit 1303. The transmission unit 1303 is configured to transmit the capability information of the terminal to the network device. The capability information of the terminal includes at least one of following: first information indicating used for whether the terminal supports collection of a data set for predicting the target downlink reference signal and/or the target link quality; second information used for indicating a maximum number of first downlink reference signal sets or second downlink reference signal sets supported by the terminal over all downlink carrier components (CCs) or bandwidth parts (BWPs); third information used for indicating a maximum number of first downlink reference signal sets or second downlink reference signal sets supported by the terminal on each downlink CC or BWP; fourth information used for indicating a maximum number of downlink reference signal resources supported by the terminal in all first downlink reference signal sets or all second downlink reference signal sets; fifth information used for indicating a maximum number of downlink reference signal resources supported by the terminal in each first downlink reference signal set or each second downlink reference signal set; sixth information used for indicating a maximum number of third downlink reference signal sets supported by the terminal over all downlink CCs or BWPs; seventh information used for indicating a maximum number of third downlink reference signal sets supported by the terminal on each downlink CC or BWP; eighth information used for indicating a maximum number of downlink reference signal resources supported by the terminal in all third downlink reference signal sets; or ninth information used for indicating a maximum number of downlink reference signal resources supported by the terminal in each third downlink reference signal set.

In some implementations, the downlink reference signal includes a channel state information-reference signal (CSI-RS) and/or a synchronization signal block (SSB).

In some implementations, the link quality includes at least one of: a reference signal received power (RSRP), a signal to interference plus noise ratio (SINR), a received signal strength indicator (RSSI), or a reference signal received quality (RSRQ).

Those skilled in the art should understand that relevant description of the above apparatus for data set determination according to the embodiments of the disclosure can be understood with reference to the relevant description of the method for data set determination according to the embodiments of the disclosure.

FIG. 14 illustrates a third schematic diagram of structural composition of an apparatus for data set determination according to embodiments of the disclosure. The apparatus is applied to a network device. As illustrated in FIG. 14, the apparatus includes a receiving unit 1401.

The receiving unit 1401 is configured to receive a data set sent by a terminal. The data set includes at least one input instance and at least one label instance. The input instance is obtained based on measurement by the terminal on downlink reference signal(s) in a first downlink reference signal set or a second downlink reference signal set. The label instance is obtained based on measurement by the terminal on downlink reference signal(s) in a third downlink reference signal set. The data set is used for training a first model on the network device side. The first model is used for predicting a target downlink reference signal and/or a target link quality.

In some implementations, the apparatus further includes a transmission unit 1402. The transmission unit 1402 is configured to transmit first configuration information and/or second configuration information to the terminal. The first configuration information is used for configuring at least one first downlink reference signal set or at least one second downlink reference signal set; and the second configuration information is used for configuring at least one third downlink reference signal set.

In some implementations, in a case that the first configuration information is used for configuring one first downlink reference signal set or one second downlink reference signal set, the one first downlink reference signal set or the one second downlink reference signal set is used for obtaining the input instance. Alternatively, in a case that the first configuration information is used for configuring multiple first downlink reference signal sets or multiple second downlink reference signal sets, the transmission unit 1402 is configured to transmit first indication information to the terminal. The first indication information is used for instructing to activate one of the multiple first downlink reference signal sets or one of the multiple second downlink reference signal sets, and the one of the multiple first downlink reference signal sets or the one of the multiple second downlink reference signal sets is used for obtaining the input instance.

In some implementations, in a case that the second configuration information is used for configuring one third downlink reference signal set, the one third downlink reference signal set is used for obtaining the label instance. Alternatively, in a case that the second configuration information is used for configuring multiple third downlink reference signal sets, the transmission unit 1402 is configured to transmit second indication information to the terminal. The second indication information is used for instructing to active one of the multiple third downlink reference signal sets, and the one of the multiple third downlink reference signal sets is used for obtaining the label instance.

In some implementations, the first configuration information and/or the second configuration information are related to capability information of the terminal.

In some implementations, the receiving unit 1401 is configured to receive capability information of the terminal to sent by the terminal. The capability information of the terminal includes at least one of following: first information used for indicating whether the terminal supports collection of a data set for predicting the target downlink reference signal and/or the target link quality; second information used for indicating a maximum number of first downlink reference signal sets or second downlink reference signal sets supported by the terminal over all downlink carrier components (CCs) or bandwidth parts (BWPs); third information used for indicating a maximum number of first downlink reference signal sets or second downlink reference signal sets supported by the terminal on each downlink CC or BWP; fourth information used for indicating a maximum number of downlink reference signal resources supported by the terminal in all first downlink reference signal sets or all second downlink reference signal sets; fifth information used for indicating a maximum number of downlink reference signal resources supported by the terminal in each first downlink reference signal set or each second downlink reference signal set; sixth information used for indicating a maximum number of third downlink reference signal sets supported by the terminal over all downlink CCs or BWPs; seventh information used for indicating a maximum number of third downlink reference signal sets supported by the terminal on each downlink CC or BWP; eighth information used for indicating a maximum number of downlink reference signal resources supported by the terminal in all third downlink reference signal sets; or ninth information used for indicating a maximum number of downlink reference signal resources supported by the terminal in each third downlink reference signal set.

In some implementations, the input instance includes M link quality measurement results; or the input instance includes M link quality measurement results and M downlink reference signal resource indices. There is a correspondence relationship between the M link quality measurement results and the M downlink reference signal resource indices. M is a positive integer.

In some embodiments, the M link quality measurement results are obtained based on measurement by the terminal on the first downlink reference signal set. Alternatively, the M link quality measurement results are top M link quality measurement results among multiple link quality measurement results, and the multiple link quality measurement results are obtained based on the terminal measuring the second downlink reference signal set, M being a positive integer.

In some implementations, the M link quality measurement results are in a first format or a second format in the input instance. The first format includes the M link quality measurement results. The second format includes a first link quality measurement result and M-1 differential values. The first link quality measurement result is one of the M link quality measurement results, and the M-1 differential values are differential values M-1 link quality measurement results of the M link quality measurement results other than the first link quality measurement result relative to the first link quality measurement result.

In some implementations, the label instance includes a first label; or the label instance includes the first label and a second label. The first label includes a downlink reference signal resource index satisfying a first condition, and the downlink reference signal resource index satisfying the first condition is determined based on measurement by the terminal on the downlink reference signal(s) in the third downlink reference signal set. The second label includes K downlink reference signal resource indices and/or K link quality measurement results satisfying a second condition. There is a correspondence relationship between the K link quality measurement results and the K downlink reference signal resource indices. The K link quality measurement results satisfying the second condition are determined based on measurement by the terminal on the downlink reference signal(s) in the third downlink reference signal set. K is a positive integer.

In some implementations, the downlink reference signal resource index satisfying the first condition refers to: a downlink reference signal resource index that corresponds to an top link quality measurement result obtained by the terminal measuring the downlink reference signal(s) in the third downlink reference signal set.

In some implementations, the K link quality measurement results satisfying the second condition refer to: top K link quality measurement results obtained by the terminal measuring the downlink reference signal(s) in the third downlink reference signal set.

In some implementations, the K link quality measurement results are in a third format or a fourth format in the label instance. The third format includes the K link quality measurement results. The fourth format includes a second link quality measurement result and K-1 differential values. The second link quality measurement result is one of the K link quality measurement results, and the K-1 differential values are differential values of K-1 link quality measurement results of the K link quality measurement results other than the second link quality measurement result relative to the second link quality measurement result.

In some implementations, the data set is carried in at least one of following signalings: radio resource control (RRC) signaling, uplink control information (UCI), or a media access control (MAC) layer container.

In some implementations, an input instance and a label instance in the data set constitute a sample for training the first model.

In some implementations, N input instances and P label instances in the data set constitute a sample for training the first model, and the N input instances and the P label instances are obtained by the terminal in a time division manner, N and P being positive integers.

In some implementations, the N input instances are in a fifth format or a sixth format in the sample. The fifth format includes: the N input instances. Ranking of the N input instances in the sample is related to a temporal order of the N input instances. The sixth format includes: the N input instances and N instance numbers. There is a correspondence relationship between the N input instances and the N instance numbers, and the N instance numbers are related to the temporal order of the N input instances.

In some implementations, the P label instances are in a seventh format or an eighth format in the sample. The seventh format includes: the P label instances. Ranking of the P label instances in the sample is related to a temporal order of the P label instances. The eighth format includes: the P label instances and P instance numbers. There is a correspondence relationship between the P label instances and the P instance numbers, and the P instance numbers are related to the temporal order of the P label instances.

In some implementations, the downlink reference signal includes a channel state information-reference signal (CSI-RS) and/or a synchronization signal block (SSB).

In some implementations, the link quality includes at least one of: a reference signal received power (RSRP), a signal to interference plus noise ratio (SINR), a received signal strength indicator (RSSI), or a reference signal received quality (RSRQ).

Those skilled in the art should understand that relevant description of the above apparatus for data set determination according to the embodiments of the disclosure can be understood with reference to the relevant description of the method for data set determination according to the embodiments of the disclosure.

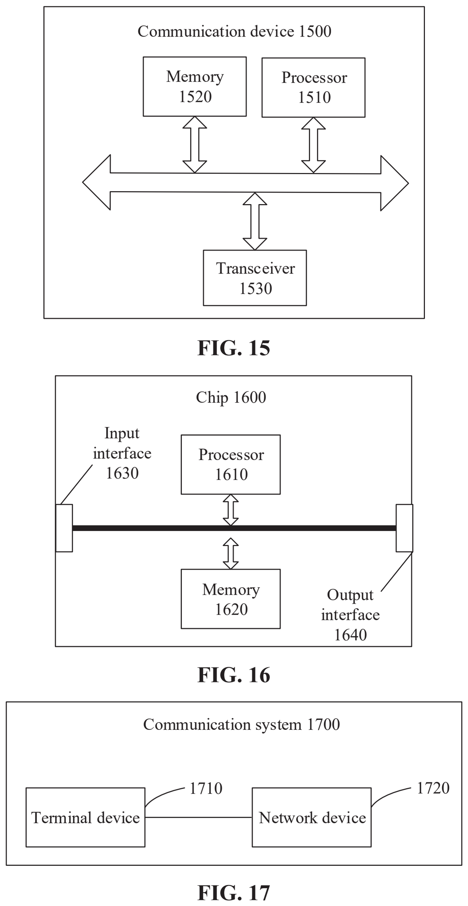

FIG. 15 illustrates a schematic structural diagram of a communication device 1500 according to embodiments of the disclosure. The communication device may be a terminal, or may be a network device. The communication device 1500 as illustrated in FIG. 15 includes a processor 1510. The processor 1510 may call and run a computer program from a memory to implement the method according to the embodiments of the disclosure.

Optionally, as illustrated in FIG. 15, the communication device 1500 may further include a memory 1520. The processor 1510 may call and run a computer program from the memory 1520 to implement the method according to the embodiments of the disclosure.

The memory 1520 may be a device independent from the processor 1510, or may be integrated in the processor 1510.

Optionally, as illustrated in FIG. 15, the communication device 1500 may further include a transceiver 1530. The processor 1510 may control the transceiver 1530 to communicate with other devices, in particular to send information or data to other devices or receive information or data from other devices.

The transceiver 1530 may include a transmitter and a receiver. The transceiver 1530 may further include an antenna, and there may be one or more antennas.

Optionally, the communication device 1500 may particularly be the network device of the embodiments of the disclosure, and the communication device 1500 may implement corresponding procedures that are implemented by the network device in various methods according to the embodiments of the disclosure, which is not described here again for simplicity.

Optionally, the communication device 1500 may particularly be a mobile terminal/terminal according to the embodiments of the disclosure, and the communication device 1500 may implement corresponding procedures that are implemented by the mobile terminal/terminal in various methods according to the embodiments of the disclosure, which is not described here again for simplicity.

FIG. 16 illustrates a schematic structural diagram of a chip according to embodiments of the disclosure. The chip 1600 as illustrated in FIG. 16 includes a processor 1610. The processor 1610 may call and run a computer program from a memory to implement the method according to the embodiments of the disclosure.

Optionally, as illustrated in FIG. 16, the chip 1600 may further include a memory 1620. The processor 1610 may call and run a computer program from the memory 1620 to implement the method according to the embodiments of the disclosure.

The memory 1620 may be a device independent from the processor 1610, or may be integrated in the processor 1610.

Optionally, the chip 1600 may further include an input interface 1630. The processor 1610 may control the input interface 1630 to communicate with other devices or chips, in particularly to acquire information or data sent by other devices or chips.

Optionally, the chip 1600 may further include an output interface 1640. The processor 1610 may control the output interface 1640 to communicate with other devices or chips, in particularly to output information or data to other devices or chips.

Optionally, the chip may be applied to the network device of the embodiments of the disclosure, and the chip may implement corresponding procedures that are implemented by the network device in various methods according to the embodiments of the disclosure, which is not described here again for simplicity.

Optionally, the chip may be applied to a mobile terminal/terminal according to the embodiments of the disclosure, and the chip may implement corresponding procedures that are implemented by the mobile terminal/terminal in various methods according to the embodiments of the disclosure, which is not described here again for simplicity.

It should be understood that, the chip mentioned in the embodiments of the disclosure may also be referred to as a system-level chip, a system chip, a chip system or a system-on-chip.

FIG. 17 illustrates a schematic block diagram of a communication system 1700 according to embodiments of the disclosure. As illustrated in FIG. 17, the communication system 1700 includes a terminal 1710 and a network device 1720.

The terminal 1710 may be applied to implement corresponding functions implemented by a terminal in the above methods, and the network device 1720 may be applied to implement corresponding functions implemented by a network device in the above methods, which is not described here again for simplicity.

It should be understood that the processor of the embodiments of the disclosure may be an integrated circuit chip, and has the capability of signal processing. During implementation, the various steps of in the above method embodiment may be completed by an integrated logic circuit in hardware form or instructions in software form in a processor. The above processor may be a general-purpose processor, a digital signal processor (DSP), an application specific integrated circuit (ASIC), a field programmable gate array (FPGA), or another programmable logical device, a discrete gate or a transistor logical device, or a discrete hardware component. The first processor may implement or perform the various methods, steps or logic blocks disclosed in the embodiments of the disclosure. The universal processor may be a microprocessor or the processor may also be any conventional processor and the like. The steps of the methods disclosed in combination with the embodiments of the disclosure may be directly embodied as being performed and completed by a hardware decoding processor, or being performed and completed by a combination of hardware and software modules in a decoding processor. The software module may be located in a mature storage medium in the art such as a random access memory, a flash memory, a read-only memory, a programmable read-only memory, an electrically erasable programmable, or a register. The storage medium is in a memory, and a processor reads information from the memory to implement steps of the above methods in combination with the hardware.

It may be understood that the memory in the embodiments of the disclosure may be a volatile memory or a non-volatile memory, or may include both a volatile memory and a non-volatile memory. The non-volatile memory may be a read-only memory (ROM), a programmable ROM (PROM), an erasable PROM (RPROM), an electrically RPROM (EEPROM), or a flash memory. The volatile memory may be a random access memory (RAM), that is used as an external cache. By way of example, but not limiting description, RAMs in many forms are available, for example, a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It should be noted that, the memory in the system and method described herein is intended to include but not limited to memories of these and any other suitable types.

It should be understood that the memories are exemplary but not limiting description. For example, the memory in the embodiments of the disclosure may also be a static RAM (SRAM), a dynamic RAM (DRAM), a synchronous DRAM (SDRAM), a double data rate SDRAM (SSD SDRAM), an enhanced SDRAM (ESDRAM), a synch link DRAM (SLDRAM), or a direct Rambus RAM (DR RAM). That is to say, the memory in the embodiments of the disclosure is intended to include but not limited to memories of these and any other suitable types.

Embodiments of the disclosure further provide a computer-readable storage medium for storing a computer program.

Optionally, the computer-readable storage medium may be applied to the network device of the embodiments of the disclosure, and the computer program enables a computer to implement corresponding procedures that are implemented by the network device in various methods according to the embodiments of the disclosure, which is not described here again for simplicity.

Optionally, the computer-readable storage medium may be applied to a mobile terminal/terminal according to the embodiments of the disclosure, and the computer program enables a computer to implement corresponding procedures that are implemented by the mobile terminal/terminal in various methods according to the embodiments of the disclosure, which is not described here again for simplicity.

Embodiments of the disclosure further provide a computer program product including computer program instructions.

Optionally, the computer program product may be applied to the network device of the embodiments of the disclosure, and the instructions of the computer program product enable a computer to implement corresponding procedures that are implemented by the network device in various methods according to the embodiments of the disclosure, which is not described here again for simplicity.

Optionally, the computer program product may be applied to a mobile terminal/terminal according to the embodiments of the disclosure, and the instructions of the computer program product enable a computer to implement corresponding procedures that are implemented by the mobile terminal/terminal in various methods according to the embodiments of the disclosure, which is not described here again for simplicity.

Embodiments of the disclosure further provide a computer program.

Optionally, the computer program may be applied to the network device of the embodiments of the disclosure, and the computer program, when running on a computer, enables the computer to implement corresponding procedures that are implemented by the network device in various methods according to the embodiments of the disclosure, which is not described here again for simplicity.

Optionally, the computer program may be applied to a mobile terminal/terminal according to the embodiments of the disclosure, and the computer program, when running on a computer, enables the computer to implement corresponding procedures that are implemented by the mobile terminal/terminal in various methods according to the embodiments of the disclosure, which is not described here again for simplicity.

Those of ordinary skill in the art may realize that the units and algorithm steps of various examples described in combination with the embodiments disclosed herein may be implemented by electronic hardware, or a combination of computer software and electronic hardware. Whether the functions are performed in form of hardware or software form depends on the specific application and design constraint conditions of the technical solution. Professionals may use a different method to realize the described function for each specific application, and such implementation should not be construed as extending beyond the scope of the disclosure.

Those skilled in the art may clearly appreciate that for convenience and simplicity of description, the particular operation procedures of the system, apparatus and units described above may refer to corresponding procedures in the foregoing method embodiment, which will not be described herein again.

In some embodiments provided in the disclosure, it is to be understood that the disclosed system, device and method may be implemented in other ways. For example, the apparatus embodiment described above is only exemplary, and for example, division of the units is only division in logic functions, and division may be made in other ways during practical implementation. For example, multiple units or components may be combined or integrated into another system, or some features may be neglected or not executed. In addition, coupling or direct coupling or communication connection between various displayed or discussed components may be indirect coupling or communication connection, implemented through some interfaces, devices or units, and may be electrical and mechanical or in other forms.

The units described as separate components may or may not be physically discrete from one another. Components displayed as units may or may not be physical units, and can be located at the same place or may be distributed to multiple network units. Some or all of the units may be chosen to realize the purpose of the solution of the embodiments according to actual requirements.

Additionally, various functional units in the embodiments of the disclosure may be integrated in one processing unit, or may exist separately physically; or two or more units may be integrated in one unit.

If implemented in form of software functional units and sold or used as independent product, the functions may be stored in a computer-readable storage medium. Based on such understanding, the technical solution of the disclosure substantially or in part making contributions to the related art or a part of the technical solution may be embodied in a software product. The computer software product is stored in a storage medium, and includes several instructions to enable a computer device (which may be a personal computer, a server, a network device or the like) to perform all or some steps of the method according to various embodiments of the disclosure. The foregoing storage medium includes various media capable of storage program codes such as a USB flash drive, a mobile hard disk drive, a read-only memory (ROM), a random access memory (RAM), a magnetic disc, or a compact disc (CD).

Stated above is merely detailed description of the disclosure, but the scope of protection of the disclosure is not limited thereto. Any modification or replacement that are easily conceivable by those familiar with the related art within the technical range disclosed by the disclosure shall fall within the scope of protection of the disclosure. Therefore, the scope of protection of the disclosure should be subjected to the claimed scope of the claims.

## Claims

1. A method for data set determination, comprising:
transmitting, by a terminal, a data set to a network device, wherein the data set comprises at least one input instance and at least one label instance; the input instance is obtained based on measurement by the terminal on downlink reference signal(s) in a first downlink reference signal set or a second downlink reference signal set, and the label instance is obtained based on measurement by the terminal on downlink reference signal(s) in a third downlink reference signal set; and the data set is used for training a first model on the network device side, and the first model is used for predicting a target downlink reference signal and/or a target link quality.

2. The method of claim 1, further comprising:
receiving, by the terminal from the network device, first configuration information and/or second configuration information;
wherein the first configuration information is used for configuring at least one first downlink reference signal set or at least one second downlink reference signal set; and the second configuration information is used for configuring at least one third downlink reference signal set.

3. The method of claim 2, wherein
in a case that the first configuration information is used for configuring one first downlink reference signal set or one second downlink reference signal set, the one first downlink reference signal set or the one second downlink reference signal set is used for obtaining the input instance; or
in a case that the first configuration information is used for configuring a plurality of first downlink reference signal sets or a plurality of second downlink reference signal sets, the method further comprises: receiving, by the terminal, first indication information sent by the network device, wherein the first indication information is used for instructing to activate one of the plurality of first downlink reference signal sets or one of the plurality of second downlink reference signal sets, and the one of the plurality of first downlink reference signal sets or the one of the plurality of second downlink reference signal sets is used for obtaining the input instance.

4. The method of claim 2, wherein
in a case that the second configuration information is used for configuring one third downlink reference signal set, the one third downlink reference signal set is used for obtaining the label instance; or
in a case that the second configuration information is used for configuring a plurality of third downlink reference signal sets, the method further comprises: receiving, by the terminal, second indication information sent by the network device, wherein the second indication information is used for instructing to active one of the plurality of third downlink reference signal sets, and the one of the plurality of third downlink reference signal sets is used for obtaining the label instance.

5. The method of any one of claims 2 to 4, wherein the first configuration information and/or the second configuration information are related to capability information of the terminal.

6. The method of any one of claims 2 to 5, further comprising:
transmitting, by the terminal, capability information of the terminal to the network device, wherein the capability information of the terminal comprises at least one of:
first information used for indicating whether the terminal supports collection of a data set for predicting the target downlink reference signal and/or the target link quality;
second information used for indicating a maximum number of first downlink reference signal sets or second downlink reference signal sets supported by the terminal over all downlink carrier components (CCs) or bandwidth parts (BWPs);
third information used for indicating a maximum number of first downlink reference signal sets or second downlink reference signal sets supported by the terminal on each downlink CC or BWP;
fourth information used for indicating a maximum number of downlink reference signal resources supported by the terminal in all first downlink reference signal sets or all second downlink reference signal sets;
fifth information used for indicating a maximum number of downlink reference signal resources supported by the terminal in each first downlink reference signal set or each second downlink reference signal set;
sixth information used for indicating a maximum number of third downlink reference signal sets supported by the terminal over all downlink CCs or BWPs;
seventh information used for indicating a maximum number of third downlink reference signal sets supported by the terminal on each downlink CC or BWP;
eighth information used for indicating a maximum number of downlink reference signal resources supported by the terminal in all third downlink reference signal sets; or
ninth information used for indicating a maximum number of downlink reference signal resources supported by the terminal in each third downlink reference signal set.

7. The method of any one of claims 1 to 6, wherein
the input instance comprises M link quality measurement results; or
the input instance comprises M link quality measurement results and M downlink reference signal resource indices, wherein there is a correspondence relationship between the M link quality measurement results and the M downlink reference signal resource indices; and
M is a positive integer.

8. The method of claim 7, wherein
the M link quality measurement results are obtained based on measurement by the terminal on the first downlink reference signal set; or
the M link quality measurement results are top M link quality measurement results among a plurality of link quality measurement results, and the plurality of link quality measurement results are obtained based on the terminal measuring the second downlink reference signal set, M being a positive integer.

9. The method of claim 7 or 8, wherein the M link quality measurement results are in a first format or a second format in the input instance:
the first format comprises the M link quality measurement results;
the second format comprises a first link quality measurement result and M-1 differential values, wherein the first link quality measurement result is one of the M link quality measurement results, and the M-1 differential values are differential values of M-1 link quality measurement results of the M link quality measurement results other than the first link quality measurement result relative to the first link quality measurement result.

10. The method of any one of claims 1 to 9, wherein
the label instance comprises a first label; or
the label instance comprises the first label and a second label;
wherein the first label comprises a downlink reference signal resource index satisfying a first condition, and the downlink reference signal resource index satisfying the first condition is determined based on measurement by the terminal on the downlink reference signal(s) in the third downlink reference signal set; and
the second label comprises K downlink reference signal resource indices and/or K link quality measurement results satisfying a second condition, there is a correspondence relationship between the K link quality measurement results and the K downlink reference signal resource indices, and the K link quality measurement results satisfying the second condition are determined based on measurement by the terminal on the downlink reference signal(s) in the third downlink reference signal set, K being a positive integer.

11. The method of claim 10, wherein the downlink reference signal resource index satisfying the first condition is:
a downlink reference signal resource index that corresponds to a top link quality measurement result obtained by the terminal measuring the downlink reference signal(s) in the third downlink reference signal set.

12. The method of claim 10 or 11, wherein the K link quality measurement results satisfying the second condition is:
top K link quality measurement results obtained by the terminal measuring the downlink reference signal(s) in the third downlink reference signal set.

13. The method of any one of claims 10 to 12, wherein the K link quality measurement results are in a third format or a fourth format in the label instance;
the third format comprises the K link quality measurement results;
the fourth format comprises a second link quality measurement result and K-1 differential values, wherein the second link quality measurement result is one of the K link quality measurement results, and the K-1 differential values are differential values of K-1 link quality measurement results of the K link quality measurement results other than the second link quality measurement result relative to the second link quality measurement result.

14. The method of any one of claims 1 to 13, wherein the data set is carried in at least one of following signalings: radio resource control (RRC) signaling, uplink control information (UCI), or a media access control (MAC) layer container.

15. The method of any one of claims 1 to 14, wherein an input instance and a label instance in the data set constitute a sample for training the first model.

16. The method of any one of claims 1 to 14, wherein N input instances and P label instances in the data set constitute a sample for training the first model, and the N input instances and the P label instances are obtained by the terminal in a time division manner, N and P being positive integers.

17. The method of claim 16, wherein the N input instances are in a fifth format or a sixth format in the sample;
the fifth format comprises: the N input instances, wherein ranking of the N input instances in the sample is related to a temporal order of the N input instances; and
the sixth format comprises: the N input instances and N instance numbers, wherein there is a correspondence relationship between the N input instances and the N instance numbers, and the N instance numbers are related to a temporal order of the N input instances.

18. The method of claim 16 or 17, wherein the P label instances are in a seventh format or an eighth format in the sample;
the seventh format comprises: the P label instances, wherein ranking of the P label instances in the sample is related to a temporal order of the P label instances; and
the eighth format comprises: the P label instances and P instance numbers, wherein there is a correspondence relationship between the P label instances and the P instance numbers, and the P instance numbers are related to a temporal order of the P label instances.

19. The method of any one of claims 16 to 18, wherein the N input instances are obtained by the terminal performing N times of measurement on the downlink reference signal(s) in the first downlink reference signal set or the second downlink reference signal set in a first period, and the P label instances are obtained by the terminal performing P times of measurement on the downlink reference signal(s) in the third downlink reference signal set in a second period.

20. The method of claim 19, further comprising:
performing, by the terminal, the N times of measurement on the downlink reference signal(s) in the first downlink reference signal set or the second downlink reference signal set in the first period, to obtain the N input instances corresponding to the first period; and
performing, by the terminal, the P times of measurement on the downlink reference signal(s) in the third downlink reference signal set in the second period, to obtain the P label instances corresponding to the second period.

21. The method of claim 19 or 20, wherein transmitting, by the terminal, the data set to the network device comprises:
transmitting, by the terminal, the data set to the network device according to a first reporting unit, wherein the first reporting unit comprises the N input instances corresponding to the first period and the P label instances corresponding to the second period.

22. The method of any one of claims 16 to 18, wherein the N input instances are obtained by the terminal performing N times of measurement on the downlink reference signal(s) in the first downlink reference signal set or the second downlink reference signal set in N cycles, and the P label instances are obtained by the terminal performing P times of measurement on the downlink reference signal(s) in the third downlink reference signal set in a final cycle of the N cycles.

23. The method of claim 22, further comprising:
performing, by the terminal in each of the N cycles, one time of measurement on the downlink reference signal(s) in the first downlink reference signal set or the second downlink reference signal set and P times of measurement on the downlink reference signal(s) in the third downlink reference signal set to obtain one input instance and P label instances corresponding to the each cycle.

24. The method of claim 22 or 23, wherein transmitting, by the terminal, the data set to the network device comprises:
transmitting, by the terminal, the data set to the network device according to a second reporting unit;
wherein the second reporting unit comprises one input instance and P label instances corresponding to the each cycle; or
the second reporting unit comprises the N input instances corresponding to the N cycles and the P label instances corresponding to the final cycle of the N cycles; or
the second reporting unit comprises all input instances and all label instances corresponding to the N cycles.

25. The method of any one of claims 1 to 24, wherein the downlink reference signal comprises a channel state information-reference signal (CSI-RS) and/or a synchronization signal block (SSB).

26. The method of any one of claims 1 to 25, wherein the link quality comprises at least one of: a reference signal received power (RSRP), a signal to interference plus noise ratio (SINR), a received signal strength indicator (RSSI), or a reference signal received quality (RSRQ).

27. A method for data set determination, comprising:
acquiring, by a terminal, a data set, wherein the data set comprises at least one input instance and at least one label instance; the input instance is obtained based on measurement on downlink reference signal(s) in a first downlink reference signal set or a second downlink reference signal set, and the label instance is obtained based on measurement on downlink reference signal(s) in a third downlink reference signal set; and the data set is used for adjusting a second model on the terminal side, and the second model is used for predicting a target downlink reference signal and/or a target link quality.

28. The method of claim 27, wherein acquiring, by the terminal, the data set comprises:
receiving, by the terminal, the data set sent by a network device, wherein the data set is all or part of a data set reported to the network device by at least one terminal, and the at least one terminal comprises the terminal or does not comprise the terminal.

29. The method of claim 28, wherein the data set is carried in at least one of following signalings:
radio resource control (RRC) signaling, or a media access control (MAC) layer container.

30. The method of claim 27, wherein acquiring, by the terminal, the data set comprises:
measuring, by the terminal, the downlink reference signal(s) in the first downlink reference signal set or the second downlink reference signal set, to obtain the input instance; and
measuring, by the terminal, the downlink reference signal(s) in the third downlink reference signal set, to obtain the label instance.

31. The method of claim 30, further comprising:
receiving, by the terminal from the network device, first configuration information and/or second configuration information;
wherein the first configuration information is used for configuring at least one first downlink reference signal set or at least one second downlink reference signal set; and the second configuration information is used for configuring at least one third downlink reference signal set.

32. The method of claim 31, wherein
in a case that the first configuration information is used for configuring one first downlink reference signal set or one second downlink reference signal set, the one first downlink reference signal set or the one second downlink reference signal set is used for obtaining the input instance; or
in a case that the first configuration information is used for configuring a plurality of first downlink reference signal sets or a plurality of second downlink reference signal sets, the method further comprises: receiving, by the terminal, first indication information sent by the network device, wherein the first indication information is used for instructing to activate one of the plurality of first downlink reference signal sets or one of the plurality of second downlink reference signal sets, and the one of the plurality of first downlink reference signal sets or the one of the plurality of second downlink reference signal sets is used for obtaining the input instance.

33. The method of claim 31, wherein
in a case that the second configuration information is used for configuring one third downlink reference signal set, the one third downlink reference signal set is used for obtaining the label instance; or
in a case that the second configuration information is used for configuring a plurality of third downlink reference signal sets, the method further comprises: receiving, by the terminal, second indication information sent by the network device, wherein the second indication information is used for instructing to active one of the plurality of third downlink reference signal sets, and the one of the plurality of third downlink reference signal sets is used for obtaining the label instance.

34. The method of any one of claims 31 to 33, wherein the first configuration information and/or the second configuration information are related to capability information of the terminal.

35. The method of any one of claims 31 to 34, further comprising:
transmitting, by the terminal, capability information of the terminal to the network device, wherein the capability information of the terminal comprises at least one of:
first information used for indicating whether the terminal supports collection of a data set for predicting the target downlink reference signal and/or the target link quality;
second information used for indicating a maximum number of first downlink reference signal sets or second downlink reference signal sets supported by the terminal over all downlink carrier components (CCs) or bandwidth parts (BWPs);
third information used for indicating a maximum number of first downlink reference signal sets or second downlink reference signal sets supported by the terminal on each downlink CC or BWP;
fourth information used for indicating a maximum number of downlink reference signal resources supported by the terminal in all first downlink reference signal sets or all second downlink reference signal sets;
fifth information used for indicating a maximum number of downlink reference signal resources supported by the terminal in each first downlink reference signal set or each second downlink reference signal set;
sixth information used for indicating a maximum number of third downlink reference signal sets supported by the terminal over all downlink CCs or BWPs;
seventh information used for indicating a maximum number of third downlink reference signal sets supported by the terminal on each downlink CC or BWP;
eighth information used for indicating a maximum number of downlink reference signal resources supported by the terminal in all third downlink reference signal sets; or
ninth information used for indicating a maximum number of downlink reference signal resources supported by the terminal in each third downlink reference signal set.

36. The method of any one of claims 27 to 35, wherein the downlink reference signal comprises a channel state information-reference signal (CSI-RS) and/or a synchronization signal block (SSB).

37. The method of any one of claims 27 to 36, wherein the link quality comprises at least one of: a reference signal received power (RSRP), a signal to interference plus noise ratio (SINR), a received signal strength indicator (RSSI), or a reference signal received quality (RSRQ).

38. A method for data set determination, comprising:
receiving, by a network device, a data set sent by a terminal, wherein the data set comprises at least one input instance and at least one label instance; the input instance is obtained based on measurement by the terminal on downlink reference signal(s) in a first downlink reference signal set or a second downlink reference signal set, and the label instance is obtained based on measurement by the terminal on downlink reference signal(s) in a third downlink reference signal set; and the data set is used for training a first model on the network device side, and the first model is used for predicting a target downlink reference signal and/or a target link quality.

39. The method of claim 38, further comprising:
transmitting, by the network device, first configuration information and/or second configuration information to the terminal;
wherein the first configuration information is used for configuring at least one first downlink reference signal set or at least one second downlink reference signal set; and the second configuration information is used for configuring at least one third downlink reference signal set.

40. The method of claim 39, wherein
in a case that the first configuration information is used for configuring one first downlink reference signal set or one second downlink reference signal set, the one first downlink reference signal set or the one second downlink reference signal set is used for obtaining the input instance; or
in a case that the first configuration information is used for configuring a plurality of first downlink reference signal sets or a plurality of second downlink reference signal sets, the method further comprises: transmitting, by the network device, first indication information to the terminal, wherein the first indication information is used for instructing to activate one of the plurality of first downlink reference signal sets or one of the plurality of second downlink reference signal sets, and the one of the plurality of first downlink reference signal sets or the one of the plurality of second downlink reference signal sets is used for obtaining the input instance.

41. The method of claim 39, wherein
in a case that the second configuration information is used for configuring one third downlink reference signal set, the one third downlink reference signal set is used for obtaining the label instance; or
in a case that the second configuration information is used for configuring a plurality of third downlink reference signal sets, the method further comprises: transmitting, by the network device, second indication information to the terminal, wherein the second indication information is used for instructing to active one of the plurality of third downlink reference signal sets, and the one of the plurality of third downlink reference signal sets is used for obtaining the label instance.

42. The method of any one of claims 39 to 41, wherein the first configuration information and/or the second configuration information are related to capability information of the terminal.

43. The method of any one of claims 39 to 42, further comprising:
receiving, by the network device, capability information of the terminal sent by the terminal, wherein the capability information of the terminal comprises at least one of:
first information used for indicating whether the terminal supports collection of a data set for predicting the target downlink reference signal and/or the target link quality;
second information used for indicating a maximum number of first downlink reference signal sets or second downlink reference signal sets supported by the terminal over all downlink carrier components (CCs) or bandwidth parts (BWPs);
third information used for indicating a maximum number of first downlink reference signal sets or second downlink reference signal sets supported by the terminal on each downlink CC or BWP;
fourth information used for indicating a maximum number of downlink reference signal resources supported by the terminal in all first downlink reference signal sets or all second downlink reference signal sets;
fifth information used for indicating a maximum number of downlink reference signal resources supported by the terminal in each first downlink reference signal set or each second downlink reference signal set;
sixth information used for indicating a maximum number of third downlink reference signal sets supported by the terminal over all downlink CCs or BWPs;
seventh information used for indicating a maximum number of third downlink reference signal sets supported by the terminal on each downlink CC or BWP;
eighth information used for indicating a maximum number of downlink reference signal resources supported by the terminal in all third downlink reference signal sets; or
ninth information used for indicating a maximum number of downlink reference signal resources supported by the terminal in each third downlink reference signal set.

44. The method of any one of claims 38 to 43, wherein
the input instance comprises M link quality measurement results; or
the input instance comprises M link quality measurement results and M downlink reference signal resource indices, wherein there is a correspondence relationship between the M link quality measurement results and the M downlink reference signal resource indices; and
M is a positive integer.

45. The method of claim 44, wherein
the M link quality measurement results are obtained based on measurement by the terminal on the first downlink reference signal set; or
the M link quality measurement results are top M link quality measurement results among a plurality of link quality measurement results, and the plurality of link quality measurement results are obtained based on the terminal measuring the second downlink reference signal set, M being a positive integer.

46. The method of claim 44 or 45, wherein the M link quality measurement results are in a first format or a second format in the input instance:
the first format comprises the M link quality measurement results;
the second format comprises a first link quality measurement result and M-1 differential values, wherein the first link quality measurement result is one of the M link quality measurement results, and the M-1 differential values are differential values of M-1 link quality measurement results of the M link quality measurement results other than the first link quality measurement result relative to the first link quality measurement result.

47. The method of any one of claims 38 to 46, wherein
the label instance comprises a first label; or
the label instance comprises the first label and a second label;
wherein the first label comprises a downlink reference signal resource index satisfying a first condition, and the downlink reference signal resource index satisfying the first condition is determined based on measurement by the terminal on the downlink reference signal(s) in the third downlink reference signal set; and
the second label comprises K downlink reference signal resource indices and/or K link quality measurement results satisfying a second condition, there is a correspondence relationship between the K link quality measurement results and the K downlink reference signal resource indices, and the K link quality measurement results satisfying the second condition are determined based on measurement by the terminal on the downlink reference signal(s) in the third downlink reference signal set, K being a positive integer.

48. The method of claim 47, wherein the downlink reference signal resource index satisfying the first condition is:
a downlink reference signal resource index that corresponds to an top link quality measurement result obtained by the terminal measuring the downlink reference signal(s) in the third downlink reference signal set.

49. The method of claim 47 or 48, wherein the K link quality measurement results satisfying the second condition is:
top K link quality measurement results obtained by the terminal measuring the downlink reference signal(s) in the third downlink reference signal set.

50. The method of any one of claims 47 to 49, wherein the K link quality measurement results are in a third format or a fourth format in the label instance;
the third format comprises the K link quality measurement results;
the fourth format comprises a second link quality measurement result and K-1 differential values, wherein the second link quality measurement result is one of the K link quality measurement results, and the K-1 differential values are differential values of K-1 link quality measurement results of the K link quality measurement results other than the second link quality measurement result relative to the second link quality measurement result.

51. The method of any one of claims 38 to 50, wherein the data set is carried in at least one of following signalings: radio resource control (RRC) signaling, uplink control information (UCI), or media access control (MAC) layer container.

52. The method of any one of claims 38 to 51, wherein an input instance and a label instance in the data set constitute a sample for training the first model.

53. The method of any one of claims 38 to 51, wherein N input instances and P label instances in the data set constitute a sample for training the first model, and the N input instances and the P label instances are obtained by the terminal in a time division manner, N and P being positive integers.

54. The method of claim 53, wherein the N input instances are in a fifth format or a sixth format in the sample;
the fifth format comprises: the N input instances, wherein ranking of the N input instances in the sample is related to a temporal order of the N input instances; and
the sixth format comprises: the N input instances and N instance numbers, wherein there is a correspondence relationship between the N input instances and the N instance numbers, and the N instance numbers are related to a temporal order of the N input instances.

55. The method of claim 53 or 54, wherein the P label instances are in a seventh format or an eighth format in the sample;
the seventh format comprises: the P label instances, wherein ranking of the P label instances in the sample is related to a temporal order of the P label instances; and
the eighth format comprises: the P label instances and P instance numbers, wherein there is a correspondence relationship between the P label instances and the P instance numbers, and the P instance numbers are related to a temporal order of the P label instances.

56. The method of any one of claims 38 to 55, wherein the downlink reference signal comprises: a channel state information-reference signal (CSI-RS) and/or a synchronization signal block (SSB).

57. The method of any one of claims 38 to 56, wherein the link quality comprises at least one of: a reference signal received power (RSRP), a signal to interference plus noise ratio (SINR), a received signal strength indicator (RSSI), or a reference signal received quality (RSRQ).

58. An apparatus for data set determination, applied to a terminal and comprising:
a transmission unit, configured to transmit a data set to a network device, wherein the data set comprises at least one input instance and at least one label instance; the input instance is obtained based on measurement by the terminal on downlink reference signal(s) in a first downlink reference signal set or a second downlink reference signal set, and the label instance is obtained based on measurement by the terminal on downlink reference signal(s) in a third downlink reference signal set; and the data set is used for training a first model on the network device side, and the first model is used for predicting a target downlink reference signal and/or a target link quality.

59. An apparatus for data set determination, applied to a terminal and comprising:
an acquisition unit, configured to acquire a data set, wherein the data set comprises at least one input instance and at least one label instance; the input instance is obtained based on measurement on downlink reference signal(s) in a first downlink reference signal set or a second downlink reference signal set, and the label instance is obtained based on measurement on downlink reference signal(s) in a third downlink reference signal set; and the data set is used for adjusting a second model on the terminal side, and the second model is used for predicting a target downlink reference signal and/or a target link quality.

60. An apparatus for data set determination, applied to a network device and comprising:
a receiving unit, configured to receive a data set sent by a terminal, wherein the data set comprises at least one input instance and at least one label instance; the input instance is obtained based on measurement by the terminal on downlink reference signal(s) in a first downlink reference signal set or a second downlink reference signal set, and the label instance is obtained based on measurement by the terminal on downlink reference signal(s) in a third downlink reference signal set; and the data set is used for training a first model on the network device side, and the first model is used for predicting a target downlink reference signal and/or a target link quality.

61. A communication device, comprising:
a memory configured to store computer-executable instructions; and
a processor coupled to the memory and configured to execute the computer-executable instructions to implement the method of any one of claims 1 to 26, or the method of any one of claims 27 to 37, or the method of any one of claims 38 to 57.

62. A chip comprising:
a processor configured to call a computer program from a memory and run the computer program to enable a device installed with the chip to perform the method of any one of claims 1 to 26, or the method of any one of claims 27 to 37, or the method of any one of claims 38 to 57.

63. A computer-readable storage medium having stored thereon a computer program that, when executed by at least one processor, implements the method of any one of claims 1 to 26, or the method of any one of claims 27 to 37, or the method of any one of claims 38 to 57.
